# EUROPEAN PATENT SPECIFICATION

(11) **EP 2 334 428 B1**
(45) Date of publication and mention of the grant of the patent: **04.04.2018**
(21) Application number: 08853416.9
(22) Date of filing: 27.11.2008
(51) Int. Cl.: B01J 23/68, B01J 23/94, C22B 7/00, C22B 23/00, C22B 34/22, C22B 34/34

(54) **PROCESS FOR RECOVERING BASE METALS FROM USED HYDROPROCESSING CATALYST**
VERFAHREN ZUR RÜCKGEWINNUNG VON NICHTEDELMETALLEN AUS GEBRAUCHTEM HYDROPROCESSING-KATALYSATOR
PROCÉDÉ DE RÉCUPÉRATION DE MÉTAUX DE BASE D'UN CATALYSEUR D'HYDROTRAITEMENT ÉPUISÉ

(30) Priority: 28.11.2007 US 946736; 20.12.2007 US 3218; 20.12.2007 US 4032
(43) Date of publication of application: 22.06.2011
(73) Proprietor: Chevron U.S.A. Inc., San Ramon, CA 94583 (US)
(72) Inventor: BHADURI, Rahul S., Moraga California 94556 (US); POWERS, Christopher A., Mandville Louisiana 70471 (US); MOHR, Donald H., Orinda California 94563 (US); REYNOLDS, Bruce E., Martinez California 94553 (US); LOPEZ, Jose Guitian, Pearland Texas 77584 (US)
(74) Representative: Haseltine Lake LLP
(86) International application number: PCT/US2008/085055
(87) International publication number: WO 2009/070778

(56) References cited:
- WO-A1-92/03520
- US-A- 4 500 495
- US-A1- 2005 101 480
- US-A1- 2005 109 674
- US-A1- 2007 025 899

## Description

### TECHNICAL FIELD

The invention relates to a process for recovering metals from used hydroprocessing catalyst.

### BACKGROUND

Traditional light oil reserves are being depleted due to high oil production. Oil fields are requiring substantial new investment in secondary and tertiary oil recovery technology. On the other hand, the cost of producing and refining heavy crude has decreased due to new production and refining technologies. Most of the heavy crude reserves all over the world have not yet been exploited. Considering the continuously increasing demand in oil and the large difference in price between light oil and heavy crude, heavy crude reserves are emerging as a very attractive source of energy.

Heavy crude contains 40-70% high boiling range material that boils over 1000°F (i.e., vacuum resid) and very low amounts of fuels in high demand such as, for example, gasoline and diesel. Therefore, in order to convert vacuum resid to valuable light products, new and more cost effective technologies are needed. Heavy crude can be converted into lighter products via conventional processes such as coking (e.g., delayed coking and/or fluid coking) and hydroconversion (e.g., LC Fining and H-OIL). However, such conventional processes produce large amounts of undesirable byproducts such as, for example, coke or fuel oil and also are very sensitive to the contaminants such as, for example, V, Ni, and S.

Catalysts have been used widely in the refining and chemical processing industries for many years. Hydroprocessing catalysts, including hydrotreating and hydrocracking catalysts, are now widely employed in facilities worldwide. Hydroprocessing technologies utilize catalysts comprising metals of Group VA, VIA, VIB, VIIA, and / or VIII metal sulfides, e.g., compounds of molybdenum disulfide (MoS₂) and nickel sulfide (NiS). Such metals are highly active in hydroconversion of heavy crudes but also are very expensive. In order to minimize the amount of catalyst required, and minimize the diffusion effects, catalyst is often unsupported.

In hydroconversion of vacuum resid and related feedstocks (upgrading of heavy oil feedstock), the remaining portion of unconverted material, which may range from 0 to 10% of fresh feed, shows low API gravity (-10 to 29), high remaining microcarbon residue (MCR) (0 to 60%), very high viscosity and asphaltenes content, and likely also contains catalyst. Therefore, the separation scheme utilized to recover valuable active metals such as, for example, MoS₂ and NiS is a critical step in making the process economically attractive. Catalyst remaining in the unconverted slurry bleed oil (USBO) is to be removed and sent for reprocessing to recover the metals and also to recover the unconverted portion of the residue in order to be recycled or further processed.

With the advent of the need to refine heavier crude feedstock, refiners are forced to use more catalysts than before for hydroprocessing to remove metals, sulfur and other contaminants from the feedstock. These catalytic processes generate huge quantities of spent catalyst. With the increasing demand and market price for metal values and environmental awareness thereof, catalysts can serve as an economic source for recovery of metals useful for catalyst synthesis and other uses.

Expensive used catalyst contained in the USBO is coated with USBO and is not leachable by conventional technologies of metals extraction that basically are effective for water-based slurries. Therefore, without additional processing, the valuable metals cannot be recovered. Technologies employing microfiltration, ultrafiltration, or nanofiltration; gravity based separation, such as centrifugation or hydrocycloning; and chemical recovery, which may be effective for water-based slurries, similarly do not provide acceptable results for catalyst coated with USBO.

In order to recycle catalytic metals and provide a renewable source for the metals, efforts have been made to extract metals from used catalysts, whether in supported or bulk catalyst form. US Patent Publication No. 2007/0025899 discloses a process to recover metals such as molybdenum, nickel, and vanadium from a used catalyst with a plurality of steps and equipment to recover the molybdenum and nickel metal complexes. US Patent No. 6,180,072 discloses another complex process requiringsolvent extraction as well as oxidation steps to recover metals from used catalysts containing at least a metal sulphide.

There is still a need for an improved and simplified process to recover metals including but not limited to molybdenum, nickel, and vanadium from used hydroprocessing catalysts

### SUMMARY OF THE INVENTION

The present invention provides a method for recovering metals from a used dispersed catalyst originating from a Group VIB metal sulfide catalyst and at least a Group VB metal promoted with a Group VIII metal for hydrocarbon oil hydroprocessing, the method comprising:
contacting the used dispersed catalyst with a leaching solution containing ammonia and air to dissolve the Group VIB metal and the Group VIII metal into the leaching solution at a sufficient temperature and pressure to form a pressure leach slurry containing at least a Group VIB soluble metal complex and at least a Group VIII soluble metal complex and solid residue containing at least a Group VB metal complex and coke;
separating and removing the solid residue containing the Group VB metal complex and coke from the pressure leach slurry, forming a pressure leach solution;
precipitating from the pressure leach solution (PLS) at least a portion of the Group VIB metal and at least a portion of the Group VIII metal, wherein the precipitation being carried out at a first pre-selected pH to precipitate as metal complexes at least a portion of the Group VIB metal and at least a portion of the Group VIII metal, wherein the method further comprises:
   recovering the precipitated metal complexes by at least a separation means selected from settling, filtration, decantation, centrifugation and combinations thereof, forming a first supernatant substantially free of at least a portion of the Group VIB metal and at least a portion of the Group VIII metal;
wherein the Group VIB metal in the used dispersed catalyst for metal recovery is molybdenum, the Group VIII metal in the used dispersed catalyst for metal recovery is nickel; and
wherein the PLS is mixed with an additive selected from the group consisting of a mineral acid, a sulfur compound having a sulfhydryl group or an ionized sulfhydryl group and mixtures thereof under mixing conditions at a temperature of 50 to 95°C, a pH level of 1 to 4 and for a sufficient time for at least 90% of the molybdenum and nickel in the PLS to precipitate out as metal complexes.

Described herein is a method for recovering catalytic metals from used dispersed catalyst slurried in heavy oil. The method comprises pyrolizing used catalyst slurried in heavy oil to provide one or more lighter oil products and a coke-like material. Catalytic metals are recovered from the coke-like material.

Also described herein is a method comprising mixing used dispersed catalyst slurried in heavy oil with solvent, which causes asphaltenes in the heavy oil to precipitate from the heavy oil. Fine catalyst and precipitated asphaltenes are separated from the heavy oil and solvent. Precipitated asphaltenes are converted to a coke-like material by pyrolizing fine catalyst and precipitated asphaltenes separated from the heavy oil.

Also described herein is a method for recovering base metals including vanadium from a used dispersed catalyst originating from a Group VIB metal sulfide catalyst promoted with a Group VIII metal for hydrocarbon oil hydroprocessing, the method comprising the steps of: contacting the used dispersed catalyst with a leaching solution containing ammonia and air to dissolve the group VIB metal and the Group VIII metal into the leaching solution, forming a pressure leach slurry containing at least a group VIB soluble metal complex, at least a group VIII soluble metal complex, ammonium sulphate and solid residue containing ammonium metavanadate and coke; separating and removing the solid residue containing ammonium metavanadate and coke from the pressure leach slurry; precipitating from the pressure leach solution at least a portion of the Group VIB metal and at least a portion of the Group VIII metal, wherein the precipitation being carried out at a first pre-selected pH to precipitate as metal complexes at least a portion of the Group VIB metal and at least a portion of the Group VIII metal.

Also described herein is a method for recovering vanadium, molybdenum and nickel from a used dispersed catalyst, the method comprising the steps of: contacting the used dispersed catalyst with a leaching solution containing ammonia and air to dissolve the molybdenum and nickel into the leaching solution, forming a pressure leach slurry containing molybdenum and nickel metal complexes, ammonium sulphate and solid residue containing ammonium metavanadate and coke; separating and removing the solid residue containing ammonium metavanadate and coke from the pressure leach slurry; adjusting the pH of the pressure leach solution by the addition of sulfuric acid to precipitate at least a portion of the molybdenum and nickel as metal complexes; separating and recovering molybdenum and nickel metal complexes from the supernatant containing 0.1 to 5% of the incoming molybdenum, 1 to 20 % of the incoming vanadium, and 1 to 35 % of the incoming nickel.

In one embodiment, the method further comprises the step of adding H₂S to the supernatant to precipitate out the remaining molybdenum and nickel metal complexes, and subsequent recovery of the molybdenum and nickel metal sulfides from the ammonium sulphate supernatant.

Also described herein is a method for recovering base metals including vanadium from a used dispersed catalyst originating from a Group VIB metal sulfide catalyst promoted with a Group VIII metal for hydrocarbon oil hydroprocessing, the method comprising the steps of: contacting the used catalyst with a leaching solution containing ammonia and air to dissolve the group VIB metal and the Group VIII metal into the leaching solution, forming a pressure leach slurry containing at least a group VIB soluble metal complex, at least a group VIII soluble metal complex, ammonium sulphate and a first solid residue containing ammonium metavanadate and coke; separating and removing the first solid residue containing ammonium metavanadate and coke from the pressure leach slurry to form a first pressure leach solution; precipitating from the first pressure leach solution at least a portion of the Group VIB metal and at least a portion of the Group VIII metal, wherein the precipitation is carried out at a first pre-selected pH to precipitate a second solid residue comprising as metal complexes at least a portion of the Group VIB metal and at least a portion of the Group VIII metal and form a second pressure leach solution comprising at least a portion of the Group VIII soluble metal complex; separating from the second pressure leach solution the second solid residue and a primary filtrate substantially free of Group VB, Group VIB and the Group VIII metals; dissolving the second solid residue, at a second pre-selected pH, to form a group VIB metal precipitate and a group VIII metal containing solution; separating the group VIB metal precipitate from the Group VIII metal containing solution and dissolving said Group VIB metal precipitate in a dilute base at a sufficient temperature to form a Group VIB metal product.

Also described herein is a method for recovering vanadium, molybdenum and nickel from the used catalyst to recover substantial amounts of a Group VIII metal, the method comprising: recovering a secondary filtrate comprising substantially the Group VIII soluble metal complex and a trace amount of Group VB and Group VIB metals; combining the secondary filtrate with the primary filtrate to form a combined filtrate comprising substantially the Group VIII soluble metal complex and a trace quantity of Group VB and Group VIB metals; precipitating from the combined filtrate the Group VB, Group VIB and Group VIII metals in a sulfidation process to form a third solid residue and a tertiary filtrate; separating the third of solid residue from the tertiary filtrate and dissolving the third solid residue to form a group VIII metal product solution.

Also described herein is a method for recovering vanadium, molybdenum, and nickel from a used catalyst and producing ammonium sulfate useful for other processes, such as fertilizer, the method comprising: all of the above processes and further comprising subjecting the tertiary filtrate to sulfamate destruction by hydrolysis to recover a purified ammonium sulfate solution.

Also described herein is a method for recovering vanadium, molybdenum and nickel from a used catalyst, the method comprising the steps of: contacting the used catalyst with a leaching solution containing ammonia and air to dissolve the molybdenum and nickel into the leaching solution, forming a pressure leach slurry containing molybdenum and nickel metal complexes, ammonium sulphate and solid residue containing ammonium metavanadate and coke; separating and removing the solid residue containing ammonium metavanadate and coke from the pressure leach slurry; adjusting the pH of the pressure leach solution by the addition of sulfuric acid to precipitate at least a portion of the molybdenum and nickel as metal complexes; separating and recovering molybdenum and nickel metal complexes from the pressure leach solution containing 0.1 to 5% of the incoming molybdenum, 1 to 20 % of the incoming vanadium, and 1 to 35 % of the incoming nickel.

In another embodiment, the method further comprises the step of adding H₂S to a combination of the primary filtrate and the secondary filtrate to precipitate the remaining molybdenum and nickel metal complexes, and subsequent recovery of, by a means a separation, the molybdenum and nickel metal sulfides from the filtered third solid residue comprising nickel sulfate.

Also described herein is a method for recovering base metals including vanadium from a used dispersed catalyst originating from a Group VIB metal sulfide catalyst promoted with a Group VIII metal for hydrocarbon oil hydroprocessing, the method comprising the steps of: contacting the used catalyst with a leaching solution containing ammonia and air to dissolve the group VIB metal and the Group VIII metal into the leaching solution, forming a pressure leach slurry containing at least a group VIB soluble metal complex, at least a group VIII soluble metal complex, ammonium sulphate and a first solid residue containing ammonium metavanadate and coke; separating and removing the first solid residue containing ammonium metavanadate and coke from the pressure leach slurry to form a first pressure leach solution; precipitating from the first pressure leach solution at least a portion of the Group VIB metal and at least a portion of the Group VIII metal, wherein the precipitation is carried out at a first pre-selected pH to precipitate a second solid residue comprising as metal complexes at least a portion of the Group VIB metal and at least a portion of the Group VIII metal and form a second pressure leach solution comprising at least a portion of the Group VIII soluble metal complex; separating from the second pressure leach solution the second solid residue and a primary filtrate substantially free of Group VB, Group VIB and the Group VIII metals; dissolving the second solid residue, at a second pre-selected pH, to form a group VIB metal precipitate and a group VIII metal containing solution; separating the group VIB metal precipitate from the Group VIII metal containing solution and dissolving said Group VIB metal precipitate in a dilute base at a sufficient temperature to form a Group VIB metal product.

Also described herein is a method for recovering vanadium, molybdenum and nickel from the used catalyst to recover substantial amounts of a Group VIII metal, the method comprising: recovering a secondary filtrate comprising substantially the Group VIII soluble metal complex and a trace amount of Group VB and Group VIB metals; processing the primary filtrate in a primary precipitation method to form a primary solid residue and a primary liquid fraction and separately processing the secondary filtrate in a secondary precipitation method to form a secondary solid residue and a secondary liquid fraction; separating the primary solid residue from the primary liquid fraction and combining the primary solid residue with the used catalyst prior to or simultaneously with contacting the used catalyst with the leaching solution; separating the secondary solid residue from the secondary liquid fraction and dissolving the secondary solid residue to form a Group VIII product solution.

The primary liquid fraction and the secondary liquid fraction may be combined to form a combined supernatant substantially free of Group VB, Group VIB and Group VIII metals.

Also described herein is a method for recovering vanadium, molybdenum, and nickel from the used catalyst and producing ammonium sulfate useful for other processes, such as fertilizer, the method comprising: all of the above processes and further comprising subjecting that combined supernatant to sulfamate hydrolysis and sulfide oxidation to recover a purified ammonium sulfate solution.

Also described herein is a method for recovering vanadium, molybdenum and nickel from a used catalyst, the method comprising the steps of: contacting the used catalyst with a leaching solution containing ammonia and air to dissolve the molybdenum and nickel into the leaching solution, forming a pressure leach slurry containing molybdenum and nickel metal complexes, ammonium sulphate and solid residue containing ammonium metavanadate and coke; separating and removing the solid residue containing ammonium metavanadate and coke from the pressure leach slurry; adjusting the pH of the pressure leach solution by the addition of sulfuric acid to precipitate at least a portion of the molybdenum and nickel as metal complexes; separating and recovering molybdenum and nickel metal complexes from the pressure leach solution containing 0.1 to 5% of the incoming molybdenum, 1 to 20 % of the incoming vanadium, and 1 to 35 % of the incoming nickel.

In another embodiment, the primary precipitation method comprises sulfidation wherein H₂S and phosphate are added to the primary filtrate and the reaction is carried out at a sufficient temperature and pressure for a sufficient length of time at multiple pH values to substantially remove molybdenum and vanadium species from the ammonium sulfate to form a primary liquid fraction and a primary solid residue. In this embodiment the secondary filtrate is passed through the secondary precipitation method comprising sulfidation wherein H₂S is added to the secondary filtrate and the reaction is carried out at a sufficient temperature and pressure for a sufficient time and at a pH value sufficient to substantially remove nickel, molybdenum and vanadium species to form a secondary liquid fraction and a secondary solid residue, to precipitate the remaining molybdenum and nickel metal complexes, and subsequent recovery of, by a means a separation, the molybdenum and nickel metal sulfides from the filtered third solid residue comprising nickel Sulfate.

### BRIEF DESCRIPTION OF THE DRAWING

Figure 1 provides an overview of various embodiments for removing oil from an unconverted slurry bleed oil (USBO) stream, comprising used dispersed catalyst.
Figure 2 is an overview of one embodiment of the metal recovery process.
Figure 3 is an overview of a second embodiment of the metal recovery process with the generation of discrete base metal streams.
Figure 4 is an overview of a third embodiment of the metal recovery process with the generation of discrete base metal streams and decontamination of ammonium sulfate co-product.

### DETAILED DESCRIPTION

The following terms will be used throughout the specification and will have the following meanings unless otherwise indicated.

As used herein, "heavy oil" feed or feedstock refers to heavy and ultra-heavy crudes, including but not limited to resids, coals, bitumen, tar sands, etc. Heavy oil feedstock may be liquid, semi-solid, and / or solid. Examples of heavy oil feedstock that might be upgraded as described herein include but are not limited to Canada Tar sands, vacuum resid from Brazilian Santos and Campos basins, Egyptian Gulf of Suez, Chad, Venezuelan Zulia, Malaysia, and Indonesia Sumatra. Other examples of heavy oil feedstock include bottom of the barrel and residuum left over from refinery processes, including "bottom of the barrel" and "residuum" (or "resid") -- atmospheric tower bottoms, which have a boiling point of at least 343°C. (650°F.), or vacuum tower bottoms, which have a boiling point of at least 524°C. (975°F.), or "resid pitch" and "vacuum residue" - which have a boiling point of 524°C. (975°F.) or greater.

Properties of heavy oil feedstock may include, but are not limited to: TAN of at least 0.1, at least 0.3, or at least 1; viscosity of at least 10 cSt; API gravity at most 15 in one embodiment, and at most 10 in another embodiment; microcarbon residue (MCR) in the range of about 15 to 30 weight% and (C₇) asphaltenes in the range of about 5 to 20 weight%. In one embodiment, a gram of heavy oil feedstock contains at least 0.0001 grams of Ni/V/Fe; at least 0.005 grams of heteroatoms; at least 0.01 grams of residue; at least 0.04 grams C5 asphaltenes; at least 0.002 grams of MCR; per gram of crude; at least 0.00001 grams of alkali metal salts of one or more organic acids; and at least 0.005 grams of sulfur. In one embodiment, the heavy oil feedstock has a sulfur content of at least 5 wt. % and an API gravity of from -5 to +5.

In one embodiment, the heavy oil feedstock comprises Athabasca bitumen (Canada) having at least 50% by volume vacuum reside. In another embodiment, the feedstock is a Boscan (Venezuela) feed with at least 64 % by volume vacuum residue. In one embodiment, the heavy oil feedstock contains at least 1000 ppm V. In another embodiment, the V level ranges between 5000 and 10000 ppm. In a third embodiment, at least 5000 ppm.

As used herein, "hydroprocessing" is meant any process that is carried out in the presence of hydrogen, including, but not limited to, methanation, water gas shift reactions, hydrogenation, hydrotreating, hydrodesulfurization, hydrodenitrogenation, hydrodemetallation, hydrodearomatization, hydroisomerization, hydrodewaxing and hydrocracking including selective hydrocracking.

As used herein, the phrase "one or more of or "at least one of when used to preface several elements or classes of elements such as X, Y and Z or X₁-Xₙ, Y₁-Yₙ and Z₁-Zₙ, is intended to refer to a single element selected from X or Y or Z, a combination of elements selected from the same common class (such as X₁ and X₂), as well as a combination of elements selected from different classes (such as X₁, Y₂ and Zₙ).

The Periodic Table referred to herein is the Table approved by IUPAC and the U.S. National Bureau of Standards, an example is the Periodic Table of the Elements by Los Alamos National Laboratory's Chemistry Division of October 2001.

The used catalyst described herein may originates from a dispersed (bulk or unsupported) Group VIB metal sulfide catalyst containing at least one of: a Group VB metal such as V, Nb; a Group VIII metal such as Ni, Co; a Group VIIIB metal such as Fe; a Group IVB metal such as Ti; a Group HB metal such as Zn, and combinations thereof. In another embodiment, the used catalyst originates from a dispersed (bulk or unsupported) Group VIB metal sulfide catalyst promoted with a Group VIII metal for hydrocarbon oil hydroprocessing. Promoters are typically added to a catalyst formulation to improve selected properties of the catalyst or to modify the catalyst activity and/or selectivity.

In another embodiment, the used catalyst originates from a bulk catalyst precursor of the formula (X)ₐ(M)_{b}[(CH₃CH₂)_{c}N(CH₃)₃]_{d}O_{z} as disclosed in US Patent Publication No. 20060060502, wherein X is Nickel, M is Mo , c is an integer from 10 to 40, the molar ratio of a:b is from 0.5/1 to 3/1. In another embodiment, the used catalyst originates from a hydroprocessing catalyst represented by the formula (M^{t})ₐ(X^{u})_{b}(S^{v})_{d}(C^{w})ₑ(H^{x})_{f}(O^{y})_{g}(N^{z})ₕ as disclosed in US Patent Application Serial No. 1 1/931972 with filing date of October 31, 2007, wherein M represents at least Mo; and X functions as a promoter metal, representing at least Ni (X is hereinafter referred to as "Promoter Metal"). Also in the equation, t, u, v, w, x, y, z representing the total charge for each of the component (M, X, S, C, H, O and N, respectively); ta+ub+vd+we+xf+yg+zh=0. The subscripts ratio of b to a has a value of greater than 0 to 5 (0 < b/a <= 5). S represents sulfur with the value of the subscript d ranging from (a + 0.5b) to (5a + 2b). C represents carbon with subscript e having a value of 0 to 11 (a + b). H is hydrogen with the value of f ranging from 0 to 7(a + b). O represents oxygen with the value of g ranging from 0 to 5(a + b); and N represents nitrogen with h having a value of 0 to 0.5(a + b). a and b each are greater than 0, In an embodiment, the ratio of a:b is in the range of 1:5 to 10:1. In another embodiment, a=5; b=1 and b/a has a value of 0.2, for used catalyst compositions having precursors of the formulae (M)₅(X)(S)₅₅, (M)₅(X)(S)_{5.5}(C)(H)(O)(N), (M)₅(X)(S)₂₇(C)₆₆(H)₄₂(O)₃₀(N)₃ amongst others.

As used herein, the term "used catalyst" refers to a catalyst that has been used in a hydroprocessing operation and, as a result of such use, exhibits relatively lower or diminished catalytic activity. For example, if a reaction rate constant of a fresh catalyst at a specific temperature is assumed to be 100%, the reaction rate constant for a used catalyst temperature is 80% or less in one embodiment, and 50% or less in another embodiment. The most commonly encountered metal to be recovered is molybdenum. In one embodiment, the metals to be recovered from the used catalyst are sulfides of Mo, Ni, and V.

In one embodiment, the used catalyst is generally in the form of a dispersed suspension having an effective median particle size of 0.01 to 200 microns. In another embodiment, the used catalyst has an average particle size of 0.01 to 100 microns. In a third embodiment, the used catalyst is a dispersed slurry having an average particle size of 0.01 to 50 microns. In one embodiment, the used catalyst has a pore volume of 0.05-5 ml/g as determined by nitrogen adsorption. In yet another embodiment, the used catalyst particles can have a size distribution in the range of about 0.2-20 microns, and a mean particle size of about 4-5 micron, with the mode being about 6-7 micron.

As used herein, the reference to "vanadium" is by way of exemplification only for any Group VB metal component that may be added to the hydroprocessing catalyst or is present in the hydroprocessing feedstock, and is not intended to exclude other Group VB metals / compounds and mixtures of that may be present in the used hydroprocessing catalyst for metal recovery.

In the sections that follow, the reference to "incoming molybdenum" (or "incoming nickel," or "incoming vanadium," etc.) refers to the amount of metal that is initially present in the used catalyst prior to the metal recovery process.

In a hydroprocessing operation, a catalyst is typically enriched / deactivated with nickel and vanadium as "contaminants" in an amount ranging up to about 100 wt% of the fresh catalyst weight. In some operations, due to the rapid coke deposition rate, the catalyst is deactivated prior to achieving its full metals adsorption capacity. Such catalysts are taken out of service when the used catalyst contains as little as 10 wt% nickel plus vanadium compounds.

Heavy Oil Upgrading. Suitable feeds to a process for upgrading heavy oils using a slurry catalyst composition, include, for example, atmospheric residuum, vacuum residuum, tar from a solvent deasphlating unit, atmospheric gas oils, vacuum gas oils, deasphalted oils, olefins, oils derived from tar sands or bitumen, oils derived from coal, heavy crude oils, synthetic oils from Fischer-Tropsch processes, and oils derived from recycled oil wastes and polymers. The feed is supplied to a reactor, wherein the feed is reacted with a catalyst slurry described in further detail below and preferably hydrogen. In an embodiment, the reactor is a liquid recirculating reactor, although other types of upflow reactors may be employed. The catalyst slurry can be useful for, but not limited to, hydrogenation upgrading processes such as thermal hydrocracking, hydrotreating, hydrodesulphurization, hydrodenitrification, and hydrodemetalization.

In one embodiment, the feedstock to the heavy oil upgrading process comprises finely divided unsupported slurry catalyst, carbon fines, and metal fines in unconverted resid hydrocarbon oil. In one embodiment, the solids content of the feedstock can be in the range of about 5-40 weight %, for example about 15-30 weight % or about 20-25 weight %.

In one embodiment of a heavy oil conversion (upgrade) process, a heavy crude oil feedstock containing greater than 50 weight% of vacuum resid with an asphaltene level of greater than 3 weight %, when subjected to a high severity conversion process can result in a vacuum reside or asphaltene conversion level in the range of about 80 to 99 weight%. In one embodiment, the process conditions include temperatures in the range of about 420 to 450°C and pressures in the range of about 500 to 3000 psi hydrogen partial pressure. An effect of high severity conversion processes is that a large fraction of the heavier components, such as, for example, asphaltenes, are converted to lighter fractions leaving a small amount of dishydrogenated asphaltenes with a high degree of condensation that are incompatible within the hydroconverted product and, therefore, have a tendency to precipitate, especially when mixed with solvent.

Effluent streams from the reactor, perhaps following downstream processing, such as, for example, separation(s), can include one or more valuable light products as well as a stream containing used dispersed catalyst. Processing of an effluent stream containing used dispersed catalyst, e.g., an unconverted slurry bleed oil (USBO) stream, is described herein. In one embodiment, the effluent stream comprises between 2 to 50 wt. % used slurry (dispersed or fine) catalyst. In another embodiment, the used slurry catalyst amount ranges from 3 to 30 wt. %. In a third embodiment, from 5 to 20 wt. %.

The cost of the catalyst, and more specifically the expensive metal(s) that comprise the catalyst, may necessitate the recovery of metals from the used catalyst for an economical heavy oil upgrading process. Additionally, the recovery of used catalyst from unconverted feed may allow for 90-100% conversion of heavy oil, as described in further detail, below. However, the high molecular weight of the unconverted heavy oil feed makes it difficult to separate unsupported catalyst therefrom. Further, conventional filtration processes may not be suitable to separate catalyst from unconverted feed, as the unsupported fine catalyst may cause plugging or fouling of filters.

Prior to metal recovery, used catalyst recovered from an upstream hydroprocessing unit in one embodiment is first washed / deoiled to remove greater than 98 wt% of the hydrocarbon feed and product oils from the used catalyst.

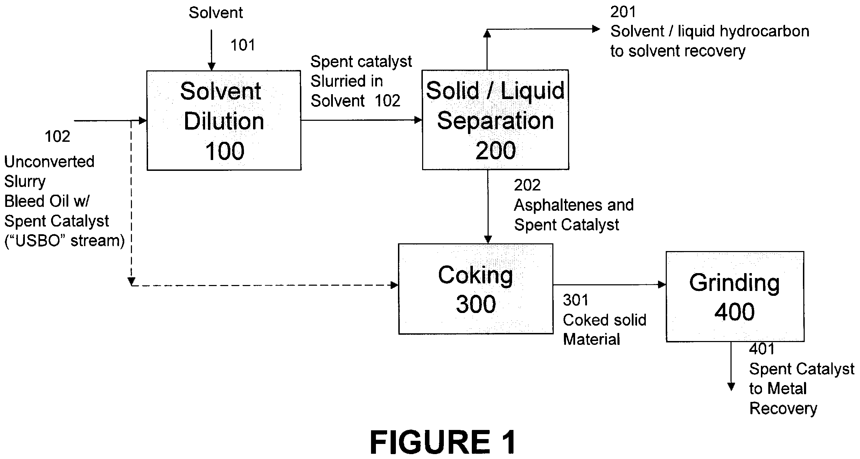

Deoiling / Removal of Oil: Before metals can be recovered from the used catalyst, the stream comprising used catalyst slurried in heavy oil ("USBO" stream) is first deoiled. In one embodiment, the used catalyst is deoiled in contact with a subcritical dense phase gas in a process as described in WO06117101A1. In yet another embodiment, deoiling is carried out using separation techniques including membrane / ion exchange, nano-filtration, cross flow filtration and the like, reducing the hydrocarbon content to less than 2 wt%. In a third embodiments as illustrated in Figure 1, the USBO stream is deoiled through a process in which the used catalyst is converted into a coke-like material in a pyrolysis process.

In one embodiment of the invention as shown in Figure 1 (dotted line), the stream comprising fine catalyst slurried in heavy oil ("USBO" stream) is thermally cracked or coked, ground, then sent to a metal recovery unit wherein catalytic metals can be recovered from the the coke-like material.

In a second embodiment, before coking, the USBO stream is mixed with solvent ("dilution"), which causes asphaltenes in the heavy oil to precipitate from the heavy oil; separating fine catalyst and precipitated asphaltenes from the heavy oil and solvent ("separation"); and converting precipitated asphaltenes to a coke-like material by pyrolizing fine catalyst and precipitated asphaltenes separated from the heavy oil ("coking"). A description of the steps involved in the deoiling process is as follows.

Dilution. In one embodiment as shown in Figure 1, a solvent 101 is mixed with stream 102 comprising used fine catalyst slurried in heavy oil in a volume ratio of about 0.5/1 to 5/1. In a second embodiment, the solvent to used catalyst mass ratio ranges from 3:1 to 1:3. In one embodiment, the solvent is an organic solvent selected from the group of xylene, benzene, toluene, kerosene, light naphtha, heavy naphtha, and/or kerosene. In another embodiment, the solvent is a commercially available solvent such as ShelSol™ 100 series solvent. In one embodiment, the mixing is for a sufficient amount of time and at a temperature sufficient to promote substantial asphaltenes precipitation. In one embodiment, this temperature ranges from about 55 to 75°C. In one embodiment, the mixing is in the range from 15 minutes to an hour. In another embodiment, for at least 20 minutes.

Mixing the fine catalyst slurried in heavy oil with solvent reduces viscosity and promotes partial asphaltenes precipitation to flocculate part of the asphaltenes and the very fine particles of the used catalyst. The stream 102 containing precipitated asphaltenes, used catalyst, heavy oil, and solvent is sent to the next step 200 for separation.

Separation. The precipitated asphaltenes and used catalyst are next separated from the heavy oil and solvent. Conventional separation techniques such as, for example, gravity decanting and/or centrifugal decanting may be used. Used catalyst recovery can be in the range of 90 to 99.9 weight%. In one embodiment, the separation is via centrifugal decanting, wherein the overflow stream 201 containing solvent and hydrocarbon liquid is sent to a conventional solvent recovery unit, and stream 202 containing precipitated asphaltenes and used catalyst is sent away for drying / coking.

Coking. When MCR or asphaltenes are exposed to extreme temperatures, ranging from 700 to 1000+°F, the petroleum molecules are "thermally cracked" in such a way as to produce some portion of lighter oil product and some portion of condensed asphaltenes and heavy molecules as petroleum coke. In one embodiment as shown in Figure 1 (dotted line), stream 102 comprising used fine catalyst slurried in heavy oil is sent directly to the coking unit. In another embodiment also as shown in Figure 1, the stream is first optionally treated with a solvent, after separation, the stream containing precipitated asphaltenes and used catalyst is sent to the coking unit.

The drying / coking device 300 can be any device known to those skilled in the art to be suitable for vaporizing any hydrocarbon liquids contained in a hydrocarbon liquid/solid slurry and coking any heavy hydrocarbon fraction contained in the hydrocarbon liquids. In one embodiment, the device is selected from an indirect fired kiln, an indirect fired rotary kiln, an indirect fired dryer, an indirect fired rotary dryer, a vacuum dryer, a flexicoker or any such drying device with substantially the same capability as the foregoing. In one embodiment, the drying / coking device is an indirect fired rotary kiln.

In one embodiment of the coking step, the feed stream containing used catalyst and MCR / asphaltenes is heated to a suitable calcining temperature between about 350°C. to about 550°C., which temperature is maintained for a sufficient residence time to produce a coked solid material and a hydrocarbon gas stream. The atmosphere in the device is inert. In one embodiment, the coking is done in an oxygen free nitrogen atmosphere or any other inert non-oxidizing atmosphere or under vacuum. In one embodiment, gas from the device is recovered and fed to an oil recovery condenser (not shown). The coked solid material from the device contains used dispersed catalyst. A large amount of coke deposited onto the catalyst can block access to the nickel and molybdenum that are desired to be leached / recovered from the used catalyst. In one embodiment, the amount of coke generated in the coking step can be many times (e.g., about 3 to about 6 times) greater than the amount of coke present on the used catalyst as it exits heavy oil upgrading. In one embodiment, the coke deposited on the solid material resulted from the coking step does not encapsulate the metals to be recovered.

Grinding. In one embodiment, the coked solid material in stream 301 is fed to a grinding device 400. In one embodiment, the grinding device is a vertical grinding or an attrition mill, therein reducing the coked material in size to between about 2 to 100 microns. In a second embodiment, from 5 to 60 microns. In a third embodiment, from 10 to 40 microns, in preparation for further metals recovery processes

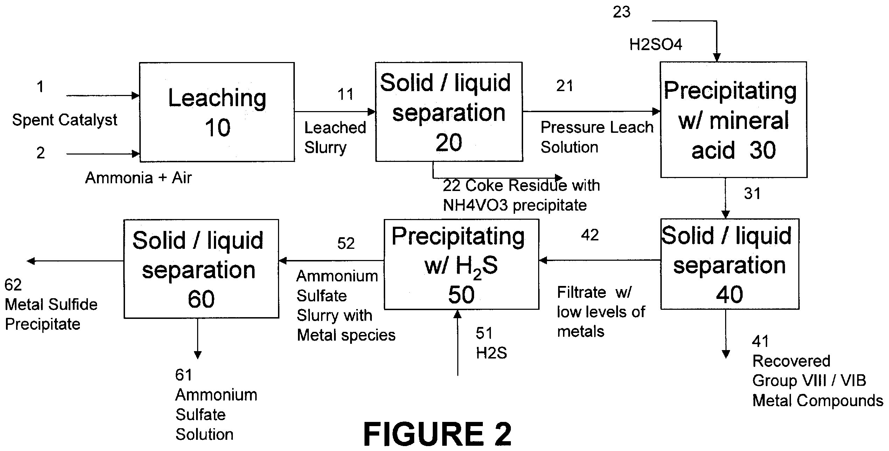

In one embodiment (not shown), the coked solid material in stream 301 is first fed via suitable means, such as an auger, screw conveyor, lock hopper or gravity flow, to a water quenching tank or spraying tank to thermally shock and break-up agglomerations of coked particulate matter and cool the material to a temperature sufficient to form an aqueous coked solids slurry before going to the grinding device. The ground coked particles retain enough porosity to be leachable in the metal recovery process. Figures 2 - 4 are flow diagrams for different embodiments of the metal recovery process, wherein the metal recovery process comprises a number of different steps.

Leaching: In one embodiment, the deoiled and dried used catalyst particles in stream 1 are first leached with an aqueous solution 2 containing ammonia and air in an autoclave 10, i.e., a multi-chambered, agitated vessel at a sufficient temperature and pressure, in which ammonia and air are supplied to induce leaching reactions, wherein the group VIB and group VIII metals are leached into solution forming group VIB and group VIII soluble metal complexes. In one embodiment, up to 90% of the (incoming) group VB metal in the feed stays in the coke phase (following discharge from the autoclave) and up to 10% of the incoming group VB metal is leached into solution. For example, for a used catalyst feed stream containing 0.5 wt. % vanadium, up to 0.050 wt% ends up in the leach solution (based on the total weight of the feed stream).

In one embodiment, vanadium is converted into ammonium metavanadate, molybdenum is converted into molybdate compounds including ammonium orthomolybdate, and portions of nickel and cobalt (if any) are converted into amine complexes, e.g., cobalt amine sulfate, nickel amine sulfate, or the like, thereby being leached. In one embodiment, at least 70 wt% of the group VIB and group VIII metals are leached into solution. In another embodiment, at least 90 wt% of the nickel and molybdenum are leached into solution.

In one embodiment, the deoiled used catalyst in stream 1 is pressure leached according to US Patent Publication No. US2007/0025899, with the addition of ammonia and air in stream 2 to induce solubilization or leaching of metal sulfides from the used catalyst. In one embodiment of the ammonical pressure leach, the leaching is carried out at a pressure proportional to the temperature. In a second embodiment, the sufficient leach temperature is between 120 to 250°C. In a third embodiment, the sufficient leach temperature is between 135 to 225°C. In one embodiment, the sufficient autoclave pressure is in the range of 0 - 1200 psig. In a second embodiment, from 100 - 1000 psig. In a third embodiment from 300 psig through about 800 psig.

In one embodiment, the used catalyst particles are pressure leached from 60 minutes to 360 minutes. In another embodiment, the used catalyst particles are pressure leached from 120 minutes to 300 minutes. In a third embodiment, the pressure leach is for a period of less than 240 minutes.

In one embodiment, the concentration of the leaching species and the pH of the leach solution are optimized with sufficient amounts of ammonia to complex the nickel, molybdenum, vanadium and cobalt (if any), and with sufficient free ammonia to control the pH within a range of 9 to 13. In one embodiment, the molar ratio of ammonia to nickel (plus any cobalt, if present) plus molybdenum plus vanadium is in the range of 20:1 to 30:1. In another embodiment, the ammonia concentration is maintained at a level of at least 1 wt%, and in a range of 2-7 wt% in yet another embodiment.

In one embodiment, the pressure leaching is carried out in an ammoniacal media at a pressure ranging from 0 to 1200 psig, at a temperature ranging from 100-300°C, and at a pH level of 8.0 or higher in order to efficiently allow the leaching reaction to progress. In another embodiment, the pH level is maintained between a range of 9 to 12.

In another embodiment (not illustrated in Figures 2 - 4), the used catalyst is first caustic leached under atmospheric pressure, according to US Patent No. 6,180,072, for an extended period of time before the pressure leaching step.

In yet another embodiment (not illustrated in Figures 2 - 4), the leached slurry 11 following cooling is transferred to a depositing / holding tank equipped with appropriate equipment to further reduce the leached slurry temperature to 90°C or less, prior to the next separation step.

Separating / Recovering Vanadium: The partially cooled leached slurry **11** is subject to liquid-solid separation via physical methods known in the art, e.g., settling, centrifugation, decantation, or filtration using a vertical type centrifugal filter or a vacuum filter or a plate and frame filter, and the like, into a liquid stream 21 (Pressure Leach Solution stream) containing the group VIB and VIII metal complexes together with ammonium sulfate and a small amount of group VB metal complexes (up to 10 wt% of the incoming group VB metal); the solid residue 22 comprises of coke and any group VB metal complex (up to 90 wt% of the incoming group VB metal). In one embodiment, the solid residue **22** comprises ammonium-containing vanadium salts such as ammonium metavanadate (NH₄VO₃) and coke. Vanadium, as ammonium metavanadate (NH₄VO₃) is subsequently recovered from the coke residue **22.** The filtrate or PLS (Pressure Leach Solution) stream **21** is then subjected to a precipitation step.

In one embodiment, liquid-solid separation of the leached slurry **11** is carried out in a filtration device, wherein the solid residue **22** containing NH₄VO₃ precipitate and coke is separated out in the form of a filter cake from the Pressure Leach Solution containing ammonium molybdate, nickel amine sulfate and ammonium sulfate. Group VB metals such as vanadium can be subsequently extracted / recovered from the filter cake, according to US Patent Publication No. US2007/0025899, by temperature and pH modification; purified NH₄VO₃ is crystallized as a wet solid and subsequently dried and calcined into vanadium pentoxide pellets. The recovered vanadium has diverse industrial applications, including use as a chemical catalyst, preparation of stainless / alloy steels, superconductive magnets and manufacturing of batteries.

In one embodiment following liquid-solid separation, the PLS stream **21** contains 10 to 100 gpL (grams per liter) molybdenum, 1 to 20 gpL nickel, 0.05 to 2.0 gpL vanadium, and 50 to 1000 gpL ammonium sulfate. In a second embodiment, the PLS stream contains 20 to 100 gpL (grams per liter) molybdenum, 5 to 20 gpL nickel, 0.10 to 1.0 gpL vanadium, and 100 to 500 gpL ammonium sulfate.

Precipitating Metal Complexes from the Pressure Leach Solution (PLS): In one embodiment of this step, the pH of the PLS **21** is controlled to a level at which selective precipitation of the metal complexes occurs ("pre-selected pH"), precipitating as metal complexes at least 90% of the Group VIB metal, at least 90% of the Group VIII metal, and at least 40% of the Group VB metal initially present prior to the precipitation. In one embodiment, about 50-80% of the vanadium leached into the PLS is recovered with the Mo-Ni precipitate with the rest remaining in solution. Up to 90% of the vanadium in solution can be subsequently recovered in an optional subsequent sulfidation step to further precipitate any molybdenum and nickel remaining in solution.

In one embodiment, the pH is adjusted to precipitate as metal complexes at least at least 95% of the Group VIB metal. In another embodiment, the pre-selected pH is less than about 3.5 to start precipitating at least 90% of soluble molybdenum complexes. In another embodiment, the pre-selected pH is from pH 1.0 to about 2.0 to initiate precipitation of at least 95% of soluble tungsten complexes. Generally, several metals can form a precipitate at a given pH. For example, at a pH level of less than 3, both Mo and Ni (and Co, if any) precipitate although more molybdenum precipitates relative to nickel. Additionally, the precipitating concept described herein can be repeated at another pH or pH range to precipitate other metals.

In one embodiment wherein the group VIB metal is molybdenum and there is an interest in precipitating most or a major portion of the molybdenum, the pH of the PLS is reduced from greater than 9.0 to less than 3.5 to precipitate greater than 90% of the Mo. In a second embodiment, the pH of the PLS is adjusted to a level of 3.0 to 3.3 to precipitate greater than 92% of the Mo. In a third embodiment, the pH of the PLS is adjusted to a level of 2.65 to 3.0 to precipitate greater than 95% of the Mo.

In one embodiment, a strong mineral acid **23** is added to the precipitating / mixing vessel **30** to adjust the pH. In another embodiment (not shown), the acid is added to the pressure leach solution **21** (PLS) feedstream. The acid used to precipitate the metal complexes may include any inorganic mineral acid with a relatively high ionization constant. In one embodiment, the acid is used in a strength ranging from 1.0 to 12.0 normal. In another embodiment, the acid is selected from the group of sulfuric acid, hydrochloric acid, phosphoric acid, nitric acid, and the like.

In another embodiment (not shown), a sulfur compound having a sulfhydryle group or an ionized sulfhydryl group or a sulfur compound, which is capable of producing a sulfhydryl group or an ionized sulfhydryl group, is used to adjust the pH of the PLS and induce precipitation. Examples include but are not limited to any sulfur compound which has a sulfhydryl (--SH) group or an ionized sulfhydryl group (--S(-1)). Compounds containing a sulfhydryl or an ionized sulfhydryle group include hydrogen sulfide and inorganic compounds containing sulfide ion, hydrosulfide ion or trithiocarbonate ion as well as organic compounds such as dithiocarbamates, xanthates, mercaptans and the soluble metal salts of these compounds, i.e., the alkali metal and alkaline earth metal salts. Furthermore, sulfur compounds which are capable of producing a sulfhydryl or an ionized sulfhydryl group, e.g., thioacetamide and reducible disulfides, can also be used. Examples of organic sulfur compounds which can be used include sodium, potassium or calcium salts of the following ions: ethyl xanthate ion, glucose xanthate ion, isopropyl xanthate ion, dimethyldithiocarbamate ion or diethyldithiocarbamate ion. Examples of inorganic sulfur compounds include sodium trithiocarbonate, potassium trithiocarbonate, calcium trithiocarbonate, sodium sulfide, potassium sulfide or calcium sulfide

In one embodiment (not shown), the sulfur compound is a sulfide-containing compound, e.g., a water soluble sulfide, a water soluble polysulfide, or mixtures thereof, is employed to adjust the pH of the Pressure Leach Solution 21 to a level at which precipitation of the metal complexes occurs. In one embodiment, hydrogen sulfide, a combination of hydrogen sulfide and caustic soda, ammonium sulfide, NaHS, or Na₂S, or mixtures thereof is used in an amount of about 0.05 to 0.2 molar to precipitate out nickel, molybdenum, cobalt, and the like from the Pressure Leach Solution **21.**

In one embodiment, the precipitation is carried out under mixing conditions at a temperature in the range of 50 to 95°C, a pH level of 1 to 4, and for a sufficient amount of time, e.g., for at least 1 hour, for at least 90% of the molybdenum and nickel in the PLS to precipitate out as a metal complexes. In another embodiment, the precipitation is carried out at a temperature of 70°C and a pH level of between 2.5 to 3.3. In one embodiment, at least 95% of the molybdenum precipitates out after 2 hours as a molybdenum compound such as ammonium octamolybdate. In another embodiment, at least 90% of the nickel precipitates out with the molybdenum as nickel ammonium sulfate.

In one embodiment, the pH of the PLS is continuously regulated for at least part of the precipitation step with the continuous addition of the additive, e.g., mineral acid or sulfide-containing compound, to control the rate of the precipitation as well as the type of metal complexes precipitating from the PLS.

In one embodiment, a sufficient amount of sulfuric acid (20-100% by weight) is used to adjust the pH of the PLS to less than 3.5. In another embodiment, a sufficient amount of sulfuric acid is added to the PLS to target a pH of 3.0, with the mixture being maintained at a temperature of 60-90°C for 1 to 3 hours, until 99% of the molybdenum precipitates out as molybdate compounds.

pH controllers known in the art can be used to automatically measure and control pH of the PLS for maximizing the amount of metals precipitated from the PLS. In one embodiment, a device using a voltametric sensor is used to control and regulate the pH of the PLS.

Separating / Recovering Precipitate of Mo and Ni Metal Complexes: After precipitation in vessel **30,** the solid precipitate is separated from solution by known means **40** including settling, filtration, decantation, centrifugation etc., or combinations thereof. In one embodiment, the separation step generates a (primary) filtrate **42** comprising low concentrations of Group VB, Group VIB and Group VIII metals, and a (secondary) solid residue **41** comprising Group VIB in Group VIII metal complexes.

In one embodiment, following solid-liquid separation, over 99% of the incoming molybdenum and over 98% of the incoming nickel are recovered in the unwashed precipitate **41.** In another embodiment, over 98% of the incoming molybdenum and over 90% of the nickel is recovered in the unwashed precipitate **41.**

In one embodiment, the unwashed precipitate **41** contains 25-50 wt% Mo, 2 to 10 wt% Ni, less than 0.5 wt% V, less than 30 wt% AmSul, 1 to 10 wt% S, with a Mo to Ni ratio ranging from 5:1 to 25:1. In yet another embodiment, the unwashed precipitate **41** contains up to 35 wt% Mo, 6 wt% Ni, less than 0.05 wt% V and about 28 wt% in Amsul, has a light greenish blue color and is soluble in warm ammoniacal solution.

In one embodiment, after liquid-solid separation, the cooled precipitate 41 is optionally doubled washed with acidic water (not shown in the Figures) at ambient temperature having a pH in the range of 2 - 3.5 to remove adhering Amsul (ammonium sulfate) that may be entrained in the Mo-Ni precipitate. A portion of the wash water may be recycled to the leaching step as feed to the autoclave. The remaining wash water may be added to the primary filtrate **42** for additional precipitation and recovery of the residual Mo and Ni in the filtrate.

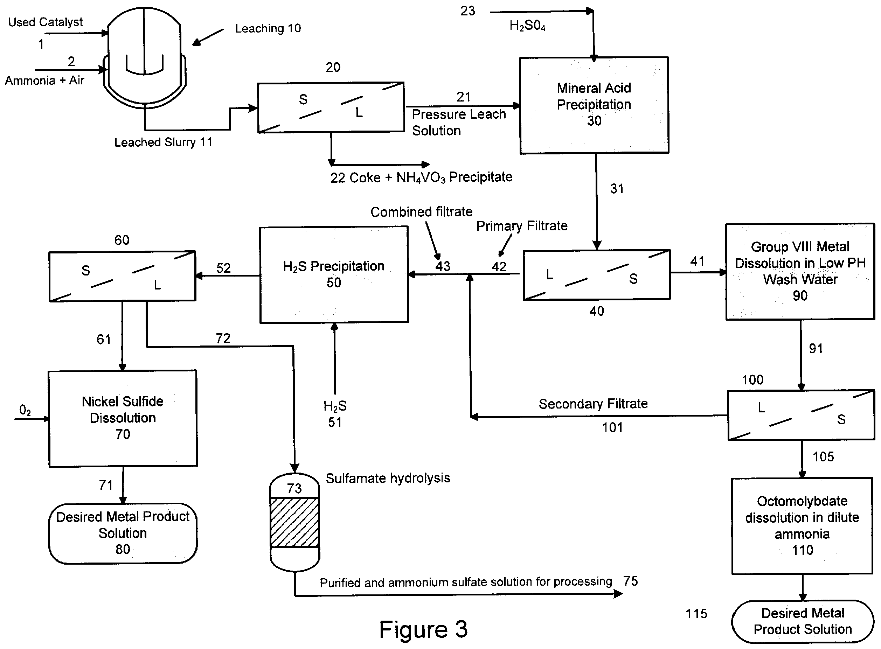

The solid precipitate **41,** containing recovered metals, in one embodiment can be routed to a catalyst synthesis operation for the preparation of fresh catalysts. In another embodiment, the solid precipitate **41** undergoes further processing, for separating nickel from other metals by acid dissolution, filtration & solvent extraction. In yet another embodiment as illustrated in Figures 3 - 4, the solid precipitate (secondary solid residue) **41** is transferred to the vessel **90** for further separation.

In one embodiment, the filtered solid precipitate **41** comprises ammonium octomolybdate and a double solid of nickel ammonium sulfate is first washed in hot, acidified water for a sufficient time to enable dissolution of the double salt of nickel from the ammonium octomolybdate. In a further embodiment as illustrated in Figures 3-4, a mixture of the dissolved double salt of nickel and the precipitated ammonium octomolybdate is separated by suitable means **100** to recover as a secondary filtrate **101,** which is a solution of nickel and ammonium sulphate, and ammonium octomolybdate precipitate **110.** In one embodiment, the nickel, vanadium and ammonium sulfate levels range from 0.10 to 1 wt. %, 0.05 to 3 wt. %, and 20 - 60 wt. %, respectively. In yet another embodiment, after a displacement wash of the solids with fresh water, the nickel, vanadium and ammonium sulfate levels range from 0.01 to 0.2 wt. %, 0.05 to 1 wt. %, and 0.05 to 3 wt. %, respectively. In one embodiment, the octomolybdate solids are redissolved in dilute ammonia in vessel **110** at a temperature ranging from 40°C to 60°C to yield an ammonium molybdate and product solution **115.**

The primary filtrate (supernatant) **42** recovered from the separation step **40** is substantially free of Group VIB and Group VIII base metals. In one embodiment, substantially free means that the primary filtrate **42** recovered from the separation step contains 0.1 to 3% of the Group VIB metal in the used dispersed catalyst, 1 to 20 % of the Group VB metal in the used dispersed catalyst, and 1 to 35 % of the Group VIII metal in the used dispersed catalyst for metal recovery.

In another embodiment, the primary filtrate **42** is primarily Amsul, with small amounts of molybdenum, vanadium, and nickel. In one embodiment, the primary filtrate **42** contains 0.1 to 2% of the incoming molybdenum, 1 to 15 % of the incoming vanadium, and 1 to 30 % of the incoming nickel. In another embodiment, the primary filtrate **42** contains from 0.1 to 1 % of the incoming molybdenum, 1 to 10 % of the incoming vanadium, and 1 to 15 % of the incoming nickel.

The secondary filtrate **101** (in Figures 3 - 4) in one embodiment is a nickel and ammonium sulfate solution. In another embodiment, the secondary filtrate **101** contains insoluble molybdenum, vanadium and high nickel and ammonium sulfate. In yet another embodiment, the secondary filtrate **101** comprises primarily nickel and trace amounts of residual molybdenum sulfide and vanadium oxide. In one embodiment, trace amount means less than 1 wt.%. In a second embodiment, a trace amount means less than 0.5 wt. %. In a third embodiment, trace amount means less than 0.1 wt.%. In a fifth embodiment, less than 0.05 wt. %. In one embodiment as shown in Figure 3, the primary filtrate **42** and the secondary filtrate **101** are mixed to form a combined filtrate **43** and transferred sulfidation tank **50.**

Optional Sulfide Precipitation of Residual Mo and Ni: In one embodiment, the pH of the primary filtrate or Amsul supernatant **42** (plus optional wash water from washing the precipitate) is adjusted to further precipitate the small amount of metals left in the Amsul filtrate as metal sulfides. In one embodiment, the primary filtrate **42** is subjected to a primary precipitation method **50** through sulfidation to adjust the pH. In one embodiment, the pH is adjusted to precipitate at least 95% of the Group VIB metal and at least 95% of the Group VIII metal initially present in the supernatant **42** prior to the precipitation.

In the embodiment of Figure 3 with the combined filtrate stream **43,** the combined filtrate pH is similarly adjusted to further precipitate the small amount of metals left.

In one embodiment, the filtrate **42** comprises low soluble nickel at less than 400 ppm and a combined concentration of molybdenum and vanadium at less than 1000 ppm and high ammonium sulfate content, in one embodiment from about 420 gpL to 470 gpL and in another embodiment about 450 gpL. In one embodiment, the pH of the primary filtrate **42** is adjusted to range between 7.5 and 8.5 by the addition of ammonia and in another embodiment a salt of di-ammonium hydrogen phosphate (DAHP) is added prior to sulfidation. In one embodiment the primary precipitation method is carried out at a pressure from atmospheric to 100 psig and at a temperature ranging from 60°C to 110°C °.

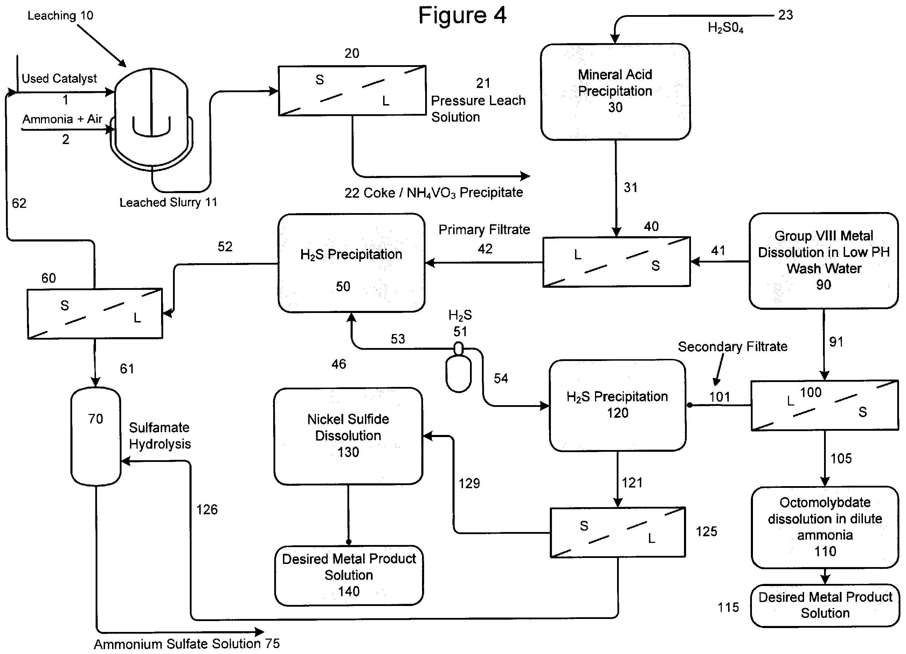

In one embodiment as illustrated in Figure 4, the secondary filtrate **101** is subjected to a secondary precipitation method **120.** In one embodiment of the (primary) precipitation method, which is carried out in vessel **50,** the pH is adjusted multiple times, from base to acid / acid to base, in the presence of a sulphur containing compound, e.g. H₂S gas and phosphate, at 100 kPa for at least 90 minutes to obtain a precipitate of Mo, Ni, and V sulfides. In one embodiment of the primary precipitation method, a mixture **51** is formed comprising a primary liquid fraction and a primary solid residue, respectively, comprising very low concentrations of molybdenum and vanadium and primarily ammonium sulfate solution. In one embodiment, the concentration of molybdenum and vanadium in the primary solid residue is less than 10 ppm.

In one embodiment as illustrated in Figure 4, the secondary filtrate **101** comprising a double salt of nickel and trace amounts of molybdenum and vanadium sulfide is passed to a sulfidation vessel **120** (secondary precipitation). In this step, the composition is subject to a sulfidation precipitation reaction in the presence of H₂S gas, at a pressure ranging from 90 psig to 110 psig, a temperature ranging from 90°C to 110°C at a pH ranging from 7.5 to 9.5 for about 30 minutes to 90 minutes to form a mixture **121** comprising the secondary liquid fraction **126** and a precipitate comprising the secondary solid residue **129.** In one embodiment, the sulfidation reaction is carried in vessel **120** at a pressure of 100 psig a temperature of 100°C and a pH ranging between 8 and 9 for 60 minutes. In one embodiment, the mixture **121** is passed to separator **125** to obtain the secondary solid residue **129** in a secondary liquid fraction **125.**

In one embodiment as illustrated in Figure 4, in separator **125,** the secondary solid residue containing residual metal sulfides is separated from the ammonium sulfate (Amsul) solution by known means including settling, filtration, decantation, centrifugation, etc., or combinations thereof. In still another embodiment, the secondary solid residue **129** comprising nickel sulfate is transferred to a pressure leaching reactor **130.** In the pressure leaching reactor **130,** the pH of the residue is adjusted to a range between 4.5 and 5.5. The residue is pressure leached in the presence of oxygen at a temperature between 160°C and 170°C at a total pressure ranging from 1000 to 1200 kPa for about one hour. In another manifestation, nickel sulfide solids are converted to a highly concentrated nickel sulfate solution **140** having a pH of less than 1, which is a desired "product solution." In one embodiment, the conversion of nickel sulfide to nickel sulfate is in excess of 90%, in another embodiment conversion is in excess of 95% and in another embodiment conversion is about 99%.

In one embodiment as illustrated in Figure 4, the primary solid residue and primary liquid fraction **52** are separated into their respective fractions in separator **60.** In one embodiment, the primary solid residue **62** can be thereafter transferred to the used catalyst feed 1 for additional leaching in autoclave **10** or transferred to other processes for metals reclamation. In one embodiment, the primary liquid fraction **61** is transferred to vessel **70,** mixed with the secondary liquid fraction **126** to form a combined supernatant that in one embodiment is subject to sulfamate hydrolysis and sulfide oxidation to form, in one embodiment, a purified ammonium sulfate solution **75.**

In one embodiment of the precipitation method, the pH is maintained at a level between 7.5 and 9 in the presence of H₂S gas at 100 kPa for at least one hour to obtain a precipitate of Mo, Ni, and V sulfides. In one embodiment with cobalt being used as a promoter group VIII metal, as cobalt precipitation increases with increasingly alkaline solution pH, the pH is adjusted up to 12 to precipitate more than 95% of the cobalt left in the combined filtrate **43** (Figure 3) or the Amsul supernatant **42** (Figure 2).

In one embodiment, a water soluble sulfide-containing compound **51,** e.g., a water soluble sulfide, a water soluble polysulfide, or mixtures thereof, is added to the combined filtrate **43** in Figure 3 or the Amsul supernatant **42** in Figure 2 (and recycled wash water, if any)) with pH adjustment, thus precipitating the small amount of metals dissolved therein. In one embodiment, the precipitation is carried out at a pressure from atmospheric to 100 psig and at a temperature ranging from 50 - 95°C. In yet another embodiment, ammonia is optionally added to the combined filtrate **43** in Figure 3 (or the Amsul supernatant **42** in Figure 2) to bring the solution pH to 8 prior to the addition of the water soluble sulfide containing compound.

In one embodiment, the water soluble sulfide-containing compound is selected from the group of hydrogen sulfide, ammonium sulfide, NaHS, or Na₂S, or mixtures thereof. In another embodiment, hydrogen sulfide is used in an amount of about 0.05 to 0.2 molar to precipitate out nickel, molybdenum, cobalt, and the like from the filtrate.

Separation / Recovering Residual Mo and Ni Metal Sulfides: In the event that a (second optional) precipitation step (via sulfidation) is employed to further recover Ni and Mo from the supernatant (filtrate) **42** from separator **40,** the metal sulfide slurry stream from precipitator **50** is sent to a separator **60.** In this step, the solid precipitate containing residual metal sulfides is separated from the ammonium sulfate (Amsul) solution by known means including settling, filtration, decantation, centrifugation, etc., or combinations thereof.

In one embodiment, a filter press (not shown in Figure 2) is used to separate the metal sulfide precipitates **62** from the ammonium sulfate solution **61.** The solids **62,** containing precipitated metal sulfides, are sent to a holding tank for subsequent metals recovery through the autoclave. In another embodiment, the solids **62,** containing precipitated metal sulfides, are sent to a holding tank for off-site disposal to metals reclaimers.

The recovered supernatant **61** (in Figure 2) or the primary liquid fraction **61** recovered from one embodiment of the primary precipitation method (Figures 3-4) is substantially free of Group VB, Group VIB and Group VIII metals, e.g., V, Mo and Ni. In one embodiment, substantially free means a removal rate of at least 90% for Group VB metals such as vanadium, and at least 95% for the Group VIB and Group VIII metals in the catalyst, e.g., molybdenum and nickel. In one embodiment, analysis of the ammonium sulfate solution **61** shows a concentration of 300 to 800 gpL Amsul, less than 100 ppm of the group VIB metals, less than 20 ppm of the Group VIII metals, and less than 100 ppm of the Group VB metals. In a second embodiment, the supernatant (ammonium sulfate solution) **61** has a concentration of 200 to 600 gpL Amsul, less than 50 ppm Mo, less than 10 ppm Ni, and less than 50 ppm V. In a third embodiment, the solution **61** contains 100 to 1000 gpL ammonium sulfate, less than 100 ppm molybdenum, less than 20 ppm nickel, and less than 100 ppm vanadium.

Ammonium sulfate can be recovered from stream **61** using methods known in the art. In one embodiment, the recovered ammonium sulfate is recycled for use as fertilizers.

In one embodiment as illustrated in Figure 3, after the slurry containing Mo, Ni, and V metal species is subjected to the solid liquid separation step **60,** the resulting solid residue **61** comprising nickel sulfide is transferred to a pressure leaching reactor **70,** wherein the pH of the residue is adjusted to a range between 4.5 and 5.5, and pressure leached in the presence of oxygen at a temperature between 160°C and 170°C at a total pressure ranging from 1000 to 1200 kPa for about one hour. In this step, the solid residue **61** is separated from the ammonium sulfate (Amsul) solution by known means including settling, filtration, decantation, centrifugation, etc., or combinations thereof. In another manifestation of this process, nickel sulfide solids are converted to a highly concentrated nickel sulfate solution having a pH of less than 1, a desired product solution 80. In one embodiment, the conversion of nickel sulfide to nickel sulfate is in excess of 90%, in another embodiment conversion is in excess of 95% and in yet another embodiment, conversion is about 99%.

The tertiary filtrate **72** recovered from this step is substantially free of Group VB, Group VIB and Group VIII metals, e.g., V, Mo and Ni. In one embodiment, substantially free means a removal rate of at least 90% for Group VB metals such as vanadium, and at least 95% for the Group VIB and Group VIII metals in the catalyst, e.g., molybdenum and nickel. In one embodiment, analysis of the tertiary filtrate, the ammonium sulfate solution **72,** shows a concentration of 300 to 800 gpL Amsul, less than 100 ppm of the group VIB metals, less than 20 ppm of the Group VIII metals, and less than 100 ppm of the Group VB metals. In a second embodiment, the tertiary filtrate (ammonium sulfate solution) **61** has a concentration of 200 to 600 gpL Amsul, less than 50 ppm Mo, less than 10 ppm Ni, and less than 50 ppm V. In a third embodiment, the tertiary filtrate sent **72** contains 100 to 1000 gpL ammonium sulfate, less than 100 ppm molybdenum, less than 20 ppm nickel, and less than 100 ppm vanadium.

In one embodiment as shown in Figure 3, a clarified ammonium sulfate effluent **72** is transferred to a reactor **73** and further subjected to sulfamate destruction by hydrolysis in the presence of steam at a temperature ranging between 210 and 250°C to produce a purified ammonium sulfate product **75** suitable for further processing, such as for fertilizer.

EXAMPLES: The following illustrative examples are intended to be non-limiting.

Example 1. Vacuum residue containing used catalyst was processed in a microcoker unit and exposed to coking conditions fro 850 to 950°F. Products from the microcoker unit included a cracked gas stream, a coker liquid product stream, and a solid coke product. The coker liquid product stream was analyzed for metals, specifically molybdenum, nickel, and vanadium. None were found. The solid coke product was similarly analyzed, and it was determined that the solid coke product contained appreciable quantities of molybdenum, nickel, and vanadium. The solid coke product was milled to 100% passing 325 mesh (44 µm) in a ceramic ball mill, and the milled sample was then was subjected to pressure leach testing under conditions taught in U.S. Patent Application Publication No. 2007/0025899 A1, the contents of which are hereby incorporated by reference in its entirety. Extraction of molybdenum was reported at 99.4%, extraction of nickel was reported at 86.3%, and extraction of vanadium was reported at 68.9%.

Example 2: Vacuum residue containing used catalyst was diluted with heavy naphtha in a volume ratio of solvent/residue of 3/1. Separation via centrifugal force in a centrifuge at 1600 g-force and 2 minutes residence time yielded 99.8 weight% of the used catalyst having particle size lower than 10 microns.

The separated solids and asphaltenes (*i.e.,* 50 weight% of the asphaltenes of the feed) were heated up to a temperature of 950°F at atmospheric pressure, with a residence time of 1 hour. The recovered solids (coke and catalyst) were ground, or milled, to a particle size range of about greater than 1 to less than 50 microns, yielding a milled material amenable to metals recovery in a 99.8 weight% of Mo and Ni. Specifically, the material was amenable to pressure leaching in an ammoniacal solution to recover valuable metals such as, for example, Mo, Ni, V, and other Group VA, VIA, VIIA, and VIII metals.

Example 3: A vacuum residue containing about 5 weight% MoS₂ and NiS catalyst. The residue stream was contacted with a heavy naphtha in a volume ratio of solvent/residue of 2/1 with a 2000 g-force and 1 minute residence time, yielding a paste containing 99.9 weight% of the catalyst and 50 weight% of the original asphaltenes (less than 1 weight% based on fresh feed to the hydrocracking unit). The paste was processed in a microcoker unit and exposed to coking conditions from around 950°F. Products from the microcoker operation included a cracked gas stream (13 weight%), a coker liquid product stream (26 weight%), and a solid coke product (61 weight%). The solid coke product was analyzed and it was determined that the coke contained appreciable quantities of Mo, Ni, and V. The coke product was milled to 100% passing 325 mesh (44 microns) in a ceramic ball mill, and then was subjected to a pressure leach. Several runs were conducted and in each, extraction of Mo was greater than 99 weight%, Ni greater than 87 weight%, and V greater than 70 weight%, as outlined below. The results are as presented in Table 1.

### Conditions of Pressure Leach Test on Coked Sample

Charge: 115.0 g dry ground coked catalyst sample, 100% -44 µm
2.0 L solution (6 M NH₃ and 30 g/L (NH₄)₂SO₄), 2 drops Aerosol OT-75
Temperature: 150°C
Total Pressure: 2800 kPa (gauge)
Oxidant: Compressed air, through sparger on demand to maintain pressure
Vent Rate: 1.0 L/min
Equipment: 4 L stainless steel batch autoclave, baffled, agitation supplied by dual axial flow impellers (7.6 cm diameter) rotating at 1120 revolutions/minute, vented through condenser and rotameter.

**Table 1**

| Time, min | Head | 0 | 30 | 60 | 120 | 180 | Final (240) |
|---|---|---|---|---|---|---|---|
| Slurry Sample | | | | | | | |
| Weight, g | | 112.6 | 98.3 | 84.2 | 77.6 | 79.5 | 1247 |
| Volume, mL | | 114 | 98 | 84 | 78 | 79 | 1180 |
| Pulp Density, g/L | | 998 | 1003 | 1002 | 995 | 1006 | 1056 |
| Solids, g | 115 | 6.2 | 4.2 | 3.6 | 3.3 | 3.5 | 66.6 |
| Solids, g/L | 58 | 54 | 43 | 43 | 42 | 44 | 56 |
| Solids, % | 5.4 | 5.5 | 4.3 | 4.3 | 4.3 | 4.4 | 5.3 |

| Solution Analysis | | | | | | | |
|---|---|---|---|---|---|---|---|
| pH | | 11.5 | 11.2 | 11.1 | 11.2 | 11.3 | 11.1 |
| NH₃ (free)*, g/L | 102 | 82 | 75 | 72 | 66 | 65 | 63 |
| Mo | | 0.96 | 4.20 | 4.45 | 4.46 | 4.51 | 4.79 |
| Ni | | 0.19 | 0.47 | 0.48 | 0.48 | 0.48 | 0.50 |
| V | | 0.09 | 0.14 | 0.15 | 0.14 | 0.15 | 0.15 |
| NH₃ (total) | | 87.2 | 81.6 | 78.8 | 75.4 | 72.6 | 71.5 |
| S | 7.3 | 8.3 | 10.1 | 10.0 | 10.1 | 10.1 | 10.6 |
| NH₄NH₂SO₃ | | 0.78 | 0.54 | 0.31 | <0.1 | <0.1 | <0.1 |
| (NH₄)₂SO₄ | 30 | 32.9 | 39.9 | 39.7 | 40.4 | 40.4 | 42.4 |
| Inorganic C | | 0.027 | 0.048 | 0.069 | 0.090 | 0.115 | 0.167 |
| Total Organic C | | 0.033 | 0.039 | 0.063 | 0.104 | 0.118 | 0.123 |

| Solids Analysis, % | | | | | | | |
|---|---|---|---|---|---|---|---|
| Mo | 8.29 | 6.61 | 0.60 | 0.082 | <0.05 | <0.05 | 0.059 |
| Ni | 0.99 | 0.66 | 0.16 | 0.11 | 0.12 | 0.14 | 0.12 |
| V | 0.41 | 0.22 | 0.11 | 0.096 | 0.096 | 0.090 | 0.088 |
| Fe | 0.13 | 0.14 | 0.13 | 0.12 | 0.11 | 0.09 | 0.10 |
| C | 68 | 72 | 80 | 80 | 80 | 79 | 79 |
| S | 8.84 | 7.37 | 3.35 | 3.05 | 2.94 | 2.78 | 3.03 |

| Extraction, % (basis) | | (C tie) | (C tie) | (C tie) | (C tie) | (C tie) | (C tie) |
|---|---|---|---|---|---|---|---|
| Mo | | 24.7 | 93.9 | 99.2 | 99.5 | 99.5 | 99.4 |
| Ni | | 36.6 | 85.9 | 90.6 | 89.3 | 88.2 | 89.5 |
| V | | 48.5 | 76.1 | 79.9 | 79.9 | 80.9 | 81.3 |
| S | | 21.3 | 67.8 | 70.7 | 71.7 | 72.9 | 70.5 |

| | | | | | | | |
|---|---|---|---|---|---|---|---|
| • titrated with 2.94 N H₂SO₄ in Research lab | | | | | | | |

Example 4: Example 3 is duplicated with the following conditions for Pressure Leach Test on Coked Sample. The results are presented in Table 2.
Charge: 50.6 g dry ground coked catalyst sample, 100% -44 µm
2.0 L solution (80 g/L NH₃ and 30 g/L (NH₄)₂SO₄), 2 drops Aerosol OT-75.
Temperature: 150°C
Total Pressure: 2800 kPa (gauge)
Oxidant: Compressed air, through sparger on demand to maintain pressure
Vent Rate: 0.5 L/min
Equipment: 4 L stainless steel batch autoclave, baffled, agitation supplied by dual axial flow impellers (7.6 cm diameter) rotating at 1120 revolutions/minute, vented through condenser and rotameter

**Table 2**

| Time, min | Head | 0 | 30 | 60 | 120 | 180 | Final (240) |
|---|---|---|---|---|---|---|---|
| Slurry Sample | | | | | | | |
| Weight, g | | 34.3 | 73.3 | 71.3 | 75.1 | 75.7 | 1373 |
| Volume, mL | | 40 | 74 | 71 | 76 | 77 | 1340 |
| Pulp Density, g/L | | 858 | 991 | 1004 | 988 | 983 | 1024 |
| Solids, g | 50.6 | 0.7 | 1.3 | 1.3 | 1.4 | 1.4 | 32.6 |
| Solids, g/L | 25.3 | 18 | 18 | 18 | 18 | 18 | 24 |
| Solids, % | 2.5 | 2.0 | 1.8 | 1.8 | 1.9 | 1.8 | 2.4 |
| Solution Analysis | | | | | | | |
| pH | | 11.3 | 11.1 | 11.0 | 11.0 | 10.9 | 10.9 |
| NH₃ (free)*, g/L | 80 | 68 | 67 | 63 | 59 | 59 | 58 |
| Mo | | 0.15 | 1.64 | 1.61 | 1.61 | 1.62 | 1.69 |
| Ni | | 0.03 | 0.19 | 0.18 | 0.18 | 0.18 | 0.19 |
| V | | <0.01 | 0.048 | 0.052 | 0.050 | 0.052 | 0.053 |
| NH₃ (total) | | 78.8 | 75.1 | 71.8 | 69.5 | 67.4 | 68.6 |
| S | 7.3 | 7.4 | 8.2 | 8.0 | 8.0 | 8.0 | 8.4 |
| NH₄NH₂SO₃ | | | | | | | <0.0.1 |
| (NH**₄**)**₂**SO₄ | 30 | | | | | | 34.2 |
| Inorganic C | | 0.023 | 0.036 | 0.038 | 0.049 | 0.056 | 0.086 |
| Total Organic C | | 0.092 | 0.084 | 0.086 | 0.103 | 0.142 | 0.167 |
| Solids Analysis, % | | | | | | | |
| Mo | 6.06 | 5.88 | 0.16 | 0.045 | 0.043 | 0.038 | 0.039 |
| Ni | 0.75 | 0.62 | 0.13 | 0.11 | 0.12 | 0.12 | 0.11 |
| V | 0.21 | 0.21 | 0.077 | 0.071 | 0.069 | 0.067 | 0.067 |
| Fe | <0.09 | 0.22 | 0.18 | 0.15 | 0.15 | 0.16 | 0.18 |
| C | 75 | 72 | 78 | 78 | 78 | 77 | 77 |
| S | 7.2 | 7.0 | 3.1 | 3.0 | 2.8 | 2.8 | 2.7 |
| Extraction, % (basis) | | | (C tie) | (C tie) | (C tie) | (C tie) | (C tie) |
| Mo | | | 97.4 | 99.3 | 99.3 | 99.4 | 99.4 |
| Ni | | | 83.0 | 85.4 | 84.8 | 83.9 | 86.3 |
| V | | | 64.7 | 67.5 | 68.4 | 68.9 | 68.9 |
| S | | | 58.6 | 59.9 | 62.6 | 62.1 | 63.5 |

| | | | | | | | |
|---|---|---|---|---|---|---|---|
| • titrated with 2.94 N H₂SO₄ in Research lab | | | | | | | |

Example 5: In this example, a PLS (deep blue color) stream with a pH of 9.2 was adjusted to ∼3.0 by single stage concentrated sulfuric acid (96%) addition. The PLS composition included 33 gpL free NH₃, 80.9 gpL Mo, 7.9 gpL Ni, 0.17 gpL V and 277 gpL ammonium sulfate (Amsul). After mixing for about 2-hours at a temperature of 70°C, about 99% of the molybdenum precipitates out as a molybdenum compound. Approximately 98% of the residual Ni also precipitates out with the molybdenum. It is believed that the compound is a mixture of ammonium octamolybdate and nickel ammonium sulfate.

The slurry is cooled to ambient and filtered to remove the precipitate. The precipitate is optionally double-washed with pH 3.0 water at ambient temperature to remove entrained ammonium sulfate. During the washing step, an additional 23% of Ni re-solubilizes to achieve a final Ni recovery of about 75%. Minimal re-solubilization of Mo occurs. The final solution (including wash) analyzes 0.53 gpL Mo, 1.49 gpL Ni, and 0.08 gpL V, for a metal precipitation efficiency of 99.2% Mo, 76.4% Ni, and 27.9% V.

The precipitate, appearing as light greenish with blue tinges, is soluble in warm ammoniacal solution. An analysis of the washed precipitated solids reveals a moisture of 34.2 wt%, 42.6 wt% Mo (dry basis), 3.17 wt% Ni (dry basis), minimal V (less than 0.02 wt%), 6.8 wt% Amsul, 3.4 wt% S and a Mo/Ni ratio of 13.4.

In the next step, a portion of the wash water is recycled to the autoclave feed. The remaining wash water and filtrate, which is primarily ammonium sulfate (Amsul), contain low levels of Mo & V together with moderate amounts of Ni. The solution pH is increased to about 7 with ammonia addition followed by sulfidation with H₂S gas under pressure at 200-kPa (30-psi) for 2-hours. The pH is maintained between 6 & 7 at a temperature of 80°C following which a precipitate of Mo, Ni and V sulfides is obtained. The slurry undergoes liquid-solid separation and the Amsul stream is further processed for recovering ammonium sulfate for use as fertilizer. Analysis of the final Amsul stream depicts 440 gpL Amsul, with 45 ppm Mo, less than 5 ppm Ni, and 26 ppm V.

Following precipitation, filtering and washing of the sulfided solids, the cake containing recovered metal sulfides is stored in a tank as autoclave feed inventory. It can also be sent for off-site disposal to metals reclaimers.

Example 6: Example 5 is repeated with a PLS stream having a pH of 10.6, containing 53 gpL free NH₃, 85 gpL Mo, 8.24 gpL Ni, 0.40 gpL V and 271 gpL ammonium sulfate (Amsul). The PLS stream pH is adjusted to 2.71. The final solution (including wash) shows 0.48 gpL Mo, 1.44 gpL Ni, and 0.08 gpL V, for a metal precipitation efficiency of 99.2% Mo, 77.3% Ni, and 75% V. The washed precipitated solids show a moisture of 25.9 wt%, 41.8 wt% Mo (dry basis), 3.37 wt% Ni (dry basis), 0.16 wt% V, 3.8 wt% AmSul, 2.76 wt% S and a Mo/Ni ratio of 12.4.

After sulfidation, the final Amsul stream concentration reveals 500 gpL Amsul, with 41 ppm Mo, less than 5 ppm Ni, and 26 ppm V.

Example 7: In this example, a PLS (deep blue color) stream with a pH of 9.2 was adjusted to ∼3.0 by single stage concentrated sulfuric acid (96%) addition. The PLS composition included 33 gpL free NH₃, 80.9 gpL Mo, 7.9 gpL Ni, 0.17 gpL V and 277 gpL ammonium sulfate (Amsul). After mixing for about 2-hours at a temperature of 80°C, about 99% of the molybdenum precipitates out as a molybdenum compound. Approximately 98% of the residual Ni also precipitates out with the molybdenum resulting in a precipitated mixture comprising ammonium octamolybdate and double salt of nickel ammonium sulfate and a primary filtrate material containing very low levels of molybdenum, nickel and vanadium.

The molybdate/and nickel precipitate, which appears as light greenish with blue tinges, is soluble in warm ammoniacal solution. An analysis of the washed precipitated solids reveals a moisture of 34.2 wt%, 42.6 wt% Mo (dry basis), 3.17 wt% Ni (dry basis), minimal V (less than 0.02 wt%), 6.8 wt% Amsul, 3.4 wt% S and a Mo/Ni ratio of 13.4. To obtain a purified molybdate product solution, the mixture was cooled to ambient temperature and filtered to separate the filtrate and precipitate, which was then repulped at 25-wt% solids in hot (80°C) pH 2 acidified water for 30-minutes, enabling dissolution of the double salt of nickel from the ammonium octamolybdate solids as per the following reaction:

NiSO₄·(NH₄)₂SO_{4.}6H₂O (s) →6H₂O (aq) +NiSO₄ (aq) + (NH₄)₂SO₄ (aq) (1)

The resulting mixture was filtered to separate the undissolved octamolybdate solids from the nickel and ammonium sulfate solution comprising secondary filtrate. Table 1 shows Ni, V and ammonium sulfate levels of 0.36-wt%, 0.16-wt% and 4-wt% respectively in the repulped and filtered octamolybdate cake. A displacement wash of the solids with fresh water lowers Ni, V and ammonium sulfate levels to 0.05-wt%, 0.17-wt% and 0.2-wt% respectively. During the washing step, an additional 23% of Ni re-solubilizes to achieve a final Ni recovery of about 75%. Minimal re-solubilization of Mo occurs. The final solution (including wash) analyzes 0.53 gpL Mo, 1.49 gpL Ni, and 0.08 gpL V, for a metal precipitation efficiency of 99.2% Mo, 76.4% Ni, and 27.9% V

**Table 3**

| Repulp-Displacement Wash Data for Separating Ni & Amsul from Octamolybdate Solids | | | |
|---|---|---|---|
| Unwashed solids from Mo-Ni Precipitation from PLS (wt. %) | | | |
| Mo | Ni | V | Ammonium Sulfate |
| 35 | 3.5 | 0.1 | 24 |

| Mo-Ni Solids Repulping @25wt.5 solids & pH2 water @80C - Filtrate Analyses | | | |
|---|---|---|---|
| Mo | Ni | V | Ammonium Sulfate |
| 0.25 | 3.5 | 0.014 | 88 |

| Mo-Ni Solids Repulping @25wt.5 solids & pH2 water @80C -Solid Analyses | | | |
|---|---|---|---|
| Mo | Ni | V | Ammonium Sulfate |
| 55.6 | 0.36 | 0.16 | 4 |

| Repulped Cake Displacement Wash, pH2, water @60C, L:S ratio 1.6:1 - Wash Water Analyses | | | |
|---|---|---|---|
| Mo | Ni | V | Ammonium Sulfate |
| 2.1 | 4.7 | 0.01 | 45 |

| Repulped Cake Displacement Wash, pH2, water @60C, L:S ratio 1.6:1 - Solid Analyses | | | |
|---|---|---|---|
| Mo | Ni | V | Ammonium Sulfate |
| 59.8 | 0.05 | 0.17 | 0.2 |

| | | | |
|---|---|---|---|
| * Greater than 99% Amsul removal and less than 1% Mo & V leaching from unwashed solids. | | | |

The solids are re-is dissolved in hot, dilute ammonia to yield ammonium molybdate product as per the following reaction:

(NH₄)₄Mo₈O₂₆·5H₂O (s) + 12NH₃ (aq) + H₂O (aq) → 8(NH₄)₂MoO₄ (aq)-- (2)

The primary filtrate from the initial step, which contains low soluble Mo, Ni & V values and high ammonium sulfate content and the secondary filtrate of nickel and ammonium sulfate solution, which contains low soluble Mo & V and high Ni and ammonium sulfate content are combined to form a mixture comprising metal levels of ∼6-gpl Ni, 330-gpL ammonium sulfate and less than 500-ppm total of Mo and V as shown in Table 4.

**Table 4**

| Test # | Feed Type | H2S Overpressure Kpa | Temp. °C | Time (min.) | pH | Mo mg/L | Ni mg/L | V mg/L | Total mg/L |
|---|---|---|---|---|---|---|---|---|---|
| 1 | Batch | 100 (∼14.5 psi) | | 0 | 8.1 | 370 | 5,860 | 38 | 6,268 |
| | Pilot Sulfidation | | 100 | 40 | 8.4 | <1 | <1 | <1 | <1 |
| 2 | Batch | 100 (∼14.5 psi) | | 0 | 8.1 | 410 | 6,400 | 36.4 | 6,846 |
| | Pilot Sulfidation | | 100 | 40 | 8.3 | <1 | <1 | <1 | <1 |

The acidic solution pH is increased to ∼8 with ammonia addition followed by sulfidation with H₂S gas under pressure at 100-kPa for 1-hour. The pH is maintained between 8 and 8.5 at a temperature of 100°C following which a precipitate of Mo, Ni and V compounds are obtained as per the following reactions:

Ni(NH₃)₂SO₄ (aq) + H₂S (g) → NiS (s) + (NH₄)₂SO₄ (aq) ----------------- (3)

2NH₄VO₃ (aq) + H₂S (aq) → V₂O₄ (s) + 2 NH₃ (aq) + S⁰ + 2 H₂O (aq) ---- (4a)

and/or

NH₄VO₃ (aq) + 4H₂S (aq) + 2NH₃ (aq) → (NH₄)₃VS₄ (aq) + 3H₂O (aq) ---- (4b)

(NH₄)₂MoO₄ (aq) + 3H₂S (g) → MoS₃ (s) + 4H₂O (aq) + 2NH₃ (aq) -------- (5a)

and/or

(NH₄)₂MoO₄ (aq) + 3H₂S (g) → (NH₄)₂MoS₄ (aq) + 4H₂O ------------------ (5b)

As shown in Table 4, all three metals precipitated to <5-ppm levels in the sulfided ammonium sulfate stream; although higher V and Mo levels are potentially present in the ammonium sulfate stream (as a result of reactions 4b & 5b), it is believed that high volumes of generated NiS (>9,000-ppm) from reaction 3 acted as a co-precipitant to partially remove both Mo & V from the solution phase.

The sulfided ammonium sulfate slurry undergoes liquid-solid separation and the ammonium stream, containing less than 10-ppm total metals content, is further processed for recovering a purified ammonium sulfate product for use as fertilizer. Analysis of the final ammonium sulfate stream indicates 440 gpL ammonium sulfate, with 45 ppm Mo, less than 5 ppm Ni, and 26 ppm V.

The filtered solids are washed with fresh water to remove adhering ammonium sulfate and soluble sulfides and repulped to a density of∼20-wt% solids. The slurry is acidified to a pH ∼5 and introduced into a reactor for pressure leaching with oxygen gas at 165°C and a total pressure of 1,100 kPag (160-psig). Table 5 illustrates complete conversion of the NiS solids into nickel sulfate within 1-hour with the product solution at an acidic pH of less than 1. The following reactions are believed to occur:

NiS (s) + 2O₂ (g) → NiSO₄ .................................................... (6)

V₂O₄ (s) + 2H₂SO4 (aq) - 2VOSO₄ (aq) + 2H₂O ................. (7)

S⁰ + 3O₂ (g) 2H₂O (aq) → 2H₂SO₄.................................... (8)

(NH₄)₂S (aq) + 2O₂ (g) → (NH₄)₂SO₄................................ (9)

MoS₃ (s) + 6O₂ (g) + 4H₂O (aq) → H₂MoO₄ (aq) + 3H₂SO₄ .... (10a)

and/or

(NH₄)₂MoS₄ (aq) + 8O₂ + 4H₂O → H₂MoO₄ (aq) + (NH₄)₂SO₄ (aq) + 3H₂SO₄(aq)......................................... is (10b)

**Table 5**

| Oxidation of NiS Cake from Sulfidation Step | | | | | | | | | |
|---|---|---|---|---|---|---|---|---|---|
| Test # | Temp °C | 02 Pressure Psi | Total Pressure Psig | Wt. % Solids | Initial pH | Final pH | Retention Time Hrs | Final Ni gpL | Ni Extm % |
| 1 | 165 | 72 | 159 | 21.9 | 4.5 | 0.9 | 2 | 75.1 | > 99% |
| 2 | 165 | 72 | 159 | 17 | 5.6 | 0.87 | 1 | 56.0 | > 99% |

Example 8. In this example and with tests having conditions shown in Table 6, the following steps can be carried out to lower the Mo and V levels in the Amsul stream: a) adjust the initial feed solution pH to ∼8 with dilute ammonia, add ∼200-ppm P as di-ammonium hydrogen phosphate, followed by sulfidation for 20-minutes; b) adjust the slurry pH to ∼2 with sulfuric acid followed by sulfidation for 20-minutes; c) adjust the final final slurry pH to ∼8 with dilute ammonia followed by sulfidation for 20-minutes.

Table 6 depicts batch results from several tests on semi-synthetic solutions or pilot plant sulfided effluent depleted of metals content; the pilot run solutions were replenished with synthetic Mo, Ni, V and Amsul salts and the tests were conducted at varying pH and DAHP content. Based on the data represented in Table 1, Ni did not indicate major solubility issues at both acidic and basic ranges. Test No. 1 clearly depicts that continuous sulfidation at neutral to ammoniacal pH does not lower Mo & V values to acceptable concentrations in the amsul effluent. Test No. 2 shows that high Mo levels in the sulfided effluent were a result of the acidic feed solution pH not being initially adjusted to the basic domain. V levels were untouched in this pH sequence zone. Test No. 3 portrays that Mo levels may be reduced in the sulfided effluent by adjusting the incoming solution pH during sulfidation from acidic to ammoniacal to acidic and finally to the basic domain over 90-minutes; V levels were still unacceptably high. Test No. 4 revealed that introduction of a phosphorus based compound, di-ammonium hydrogen phosphate or DAHP, lowered V to acceptable levels in the sulfided effluent. Although Mo levels were high as a result of not adjusting the initial feed solution pH within the ammoniacal region, metal values were significantly lower than Test 2 indicating positive synergies with phosphate addition.

As shown in the tests, it is believed that by adding the phosphate compound (DAHP), the newly formed ammonium phosphomolybdate (reaction 4) functioned as a co-precipitant for solubilized vanadium species thus minimizing soluble vanadium levels in the sulfided amsul effluent slurry. The sulfided amsul slurry undergoes liquid-solid separation (step 6) and the amsul stream, containing less than 10-ppm total metals content.

The sulfided amsul slurry undergoes liquid-solid separation (step 6") and the amsul stream, containing less than 5-ppm total metals content, is processed as per the original invention (step 7). the filtered solids from step 6" (Figure 2) are washed with fresh water to remove adhering amsul and soluble sulfides and repulped to a density of ∼20-wt% solids. The slurry is acidified to a pH ∼5 and introduced into a reactor for pressure leaching with oxygen gas at 165°C and a total pressure of 1,100 kPag (160-psig).

Table 7 depicts all three metals precipitated to <5-ppm levels in the sulfided amsul stream; although higher V and Mo levels were potentially expected to be present in the amsul stream (as a result of reactions 13 & 15), it is believed that high volumes of generated NiS (>40,000-ppm) from reaction 11 acted as a coprecipitant to partially and/or fully remove both Mo & V from the solution phase.

**Table 7**

| Sulfidation of Ammonium Sulfate Solutions (100gpL) with Ni(26gpL) & Low Mo / V (<100ppm) | | | | | | | | | |
|---|---|---|---|---|---|---|---|---|---|
| Test | Feed Type | H2S overpressure Kpa | Temp °C | Time Min | pH | Mo mg/L | Ni mg/L | V mg/L | Total mg/L |
| 1 | Batch pilot | 100 | 100 | 0 | 8.1 | 50 | 26,500 | 15 | 26,565 |
| | sulfidation | ∼14.5psi | | 40 | 8.0 | <1 | <1 | <1 | <1 |
| 2 | Batch pilot | 100 | 100 | 0 | 8.4 | 42 | 25, 700 | 12 | 25,754 |
| | sulfidation | ∼14.5psi | | 40 | 8.0 | <1 | <1 | <1 | <1 |

For the purposes of this specification and appended claims, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that may vary depending upon the desired properties sought to be obtained by the present invention. It is noted that, as used in this specification and the appended claims, the singular forms "a," "an," and "the," include plural references unless expressly and unequivocally limited to one referent. As used herein, the term "include" and its grammatical variants are intended to be non-limiting, such that recitation of items in a list is not to the exclusion of other like items that can be substituted or added to the listed items.

This written description uses examples to disclose the invention, including the best mode, and also to enable any person skilled in the art to make and use the invention. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

**Table 6**

| Test No. | Feed Type | H2S O.P. Kpa | T. °C | DAHP as P ppm | Time min | pH | Ni ppm | V ppm | Mo ppm | Total Metals ppm | Residual P ppm |
|---|---|---|---|---|---|---|---|---|---|---|---|
| 1 | Semi | 100 (14.5 Psi) | 10 | 0 | 0 | 6.7 | 340.0 | 150.0 | 578.0 | 204.1 | 0 |
| | Synthetic | | 0 | | 40 | 6.6 | 0.3 | 131.2 | 76.2 | | 0 |
| | Solution | | | | 60 | 8.0 | 0.4 | 130.0 | 72.6 | | 0 |
| | | | | | 80 | 8.1 | 0.7 | 130.4 | 73.0 | | 0 |
| 2 | Semi | 100 (14.5 Psi) | 10 | 0 | 0 | 2.5 | 300.0 | 150.0 | 600.0 | 231.8 | 0 |
| | Synthetic | | 0 | | 40 | 2.4 | 264.0 | 149.0 | 50.0 | | 0 |
| | Solution | | | | 60 | 8.0 | 2.3 | 117.0 | 130.0 | | 0 |
| | | | | | 80 | 8.3 | 1.8 | 111.0 | 119.0 | | 0 |
| 3 | Semi | 100 (14.5 Psi) | 10 | 0 | 0 | 8.5 | 320.0 | 150.0 | 560.0 | 75.5 | 0 |
| | Synthetic | | 0 | | 40 | 2.1 | 2.3 | 129.6 | 0.8 | | 0 |
| | Solution | | | | 60 | 8.4 | 4.2 | 105.0 | 19.9 | | 0 |
| | | | | | 80 | 8.4 | 4.4 | 57.7 | 13.4 | | 0 |
| 4 | Semi | 100 (14.5 Psi) | 10 | 7000 | 0 | 3.1 | 292.0 | 150.0 | 495.0 | 53.7 | 7000 |
| | Synthetic | | 0 | | 40 | 2.8 | 1.4 | 13.4 | 4.6 | | 6572 |
| | Solution | | | | 60 | 8.3 | 0.9 | 4.9 | 45.3 | | 5310 |
| | | | | | 80 | 8.2 | 1.0 | 5.4 | 47.3 | | 5270 |
| 5 | Semi | 100 (14.5 Psi) | 10 | 1500 | 0 | 6.5 | 300.0 | 150.0 | 536.0 | 16.9 | 1322 |
| | Synthetic | | 0 | | 40 | 2.2 | 1.0 | 152.0 | 0.8 | | 1368 |
| | Solution | | | | 60 | 8.6 | 0.5 | 5.5 | 5.7 | | 940 |
| | | | | | 80 | 8.5 | 0.9 | 6.4 | 9.6 | | 940 |
| 6 | Semi | 100 (14.5 Psi) | 10 | 1500 | 0 | 7.8 | 300.0 | 150.0 | 514.0 | 13.5 | 1473 |
| | Synthetic | | 0 | | 40 | 2.0 | 1.1 | 131.4 | 1.4 | | 1356 |
| | Solution | | | | 60 | 7.8 | 0.3 | 10/8 | 4.5 | | 1040 |
| | | | | | 80 | 8.2 | 0.3 | 7.5 | 5.7 | | 980 |
| 7 | Semi | 100 (14.5 Psi) | 10 | 340 | 0 | 7.6 | 254.0 | 150.0 | 444.0 | 8.5 | 340 |
| | Synthetic | | 0 | | 40 | 2.0 | 1.2 | 143.0 | 1.4 | | 394 |
| | Solution | | | | 60 | 7.0 | 0.1 | 2.3 | 2.1 | | 250 |
| | | | | | 80 | 8.1 | 0.1 | 6.5 | 1.9 | | 250 |
| 8 | Semi | 100 (14.5 Psi) | 10 | 495 | 0 | 8.6 | 345.0 | 150.0 | 520.0 | 5.8 | 495 |
| | Synthetic | | 0 | | 40 | 2.2 | 0.7 | 134.0 | <0.1 | | 456 |
| | Solution | | | | 60 | 7.7 | <0.1 | 5.8 | <0.1 | | 300 |
| 9 | Semi | 100 (14.5 Psi) | 10 | 261 | 0 | 8.5 | 345.0 | 150.0 | 520.0 | 4.9 | 261 |
| | Synthetic | | 0 | | 40 | 2.2 | 0.2 | 92.4 | <0.1 | | 261 |
| | Solution | | | | 60 | 7.5 | <1 | 4.9 | <0.1 | | 170 |

## Claims

1. A method of recovering metals from a used dispersed catalyst originating from a Group VIB metal sulfide catalyst and at least a Group VB metal promoted with a Group VIII metal for hydrocarbon oil hydroprocessing, the method comprising:
contacting the used dispersed catalyst with a leaching solution containing ammonia and air to dissolve the Group VIB metal and the Group VIII metal into the leaching solution at a sufficient temperature and pressure to form a pressure leach slurry containing at least a Group VIB soluble metal complex and at least a Group VIII soluble metal complex and solid residue containing at least a Group VB metal complex and coke;
separating and removing the solid residue containing the Group VB metal complex and coke from the pressure leach slurry, forming a pressure leach solution;
precipitating from the pressure leach solution (PLS) at least a portion of the Group VIB metal and at least a portion of the Group VIII metal, wherein the precipitation being carried out at a first pre-selected pH to precipitate as metal complexes at least a portion of the Group VIB metal and at least a portion of the Group VIII metal, wherein the method further comprises:
recovering the precipitated metal complexes by at least a separation means selected from settling, filtration, decantation, centrifugation and combinations thereof, forming a first supernatant substantially free of at least a portion of the Group VIB metal and at least a portion of the Group VIII metal;
wherein the Group VIB metal in the used dispersed catalyst for metal recovery is molybdenum, the Group VIII metal in the used dispersed catalyst for metal recovery is nickel; and
wherein the PLS is mixed with an additive selected from the group consisting of a mineral acid, a sulfur compound having a sulfhydryl group or an ionized sulfhydryl group and mixtures thereof under mixing conditions at a temperature of 50 to 95°C, a pH level of 1 to 4 and for a sufficient time for at least 90% of the molybdenum and nickel in the PLS to precipitate out as metal complexes.

2. The method of claim 1, wherein the first supernatant contains 0.1 to 3% of the Group VIB metal in the used dispersed catalyst for metal recovery, 1 to 20 % of the Group VB metal in the used dispersed catalyst for metal recovery, and 1 to 35 % of the Group VIII metal in the used dispersed catalyst for metal recovery.

3. The method of claim 1, wherein the first supernatant contains 0.1 to 3% of the Group VIB metal in the used dispersed catalyst for metal recovery, 1 to 20 % of the Group VB metal in the used dispersed catalyst for metal recovery, and 1 to 35 % of the Group VIII metal in the used dispersed catalyst for metal recovery further comprising the step of:
precipitating from the first supernatant at least a portion of the Group VIB metal and at least a portion of the Group VIII metal, wherein the precipitation being carried out at a second pre-selected pH to precipitate as metal complexes at least 95% of the Group VIB metal and at least 95% of the Group VIII metal initially present in the first supernatant prior to the precipitation at the second pre-selected pH.

4. The method of claim 3, wherein the method further comprises
recovering the Group VIB and group VIII metal sulfides by at least a separation means selected from settling, filtration, decantation, centrifugation and combinations thereof, forming a second supernatant containing less than 100 ppm of the group VIB metal, less than 20 ppm of the Group VIII metal, and less than 100 ppm of the Group VB metal.

5. The method of claim 3, wherein the Group VB metal in the used dispersed catalyst for metal recovery is vanadium, the pressure leach solution is adjusted to a pH of 3 or less with the addition of a sulfuric acid for at least 95% of the molybdenum to precipitate out as a molybdate complex, the molybdate complex is separated from the first supernatant by filtration, H₂S is added to the first supernatant at a pressure from atmospheric to 100 psig and at a temperature ranging from 50 - 95°C to obtain a precipitate of Mo, Ni, and V sulfides, the Mo, Ni, and V sulfides are separated from the second supernatant by filtration, and wherein the second supernatant contains 100 to 1000 gpL ammonium sulfate, less than 100 ppm molybdenum, less than 20 ppm nickel, and less than 100 ppm vanadium.

6. The method of any of claims 1-5, wherein at least 90% of the Group VIB metal precipitates from the pressure leach solution as a metal complex.

7. The method of any of claims 1-6, wherein the first pre-selected pH is in the range of 2.5 to 3.3 to precipitate greater than 90% of the molybdenum as a molybdate complex.

8. The method of any of claims 1-7, wherein the pH of the pressure leach solution is adjusted to a pH of 3 or less with at least one of a water soluble sulfide, a water soluble polysulfide, or mixtures thereof.

9. The method of any of claims 1-7, wherein the pH of the PLS is adjusted to a pH of 3.5 or less with an acid selected from the group of sulfuric acid, hydrochloric acid, phosphoric acid and nitric acid.

10. The method of claim 9, wherein the PLS is adjusted to a pH of 3 or less with the addition of a sulfuric acid for at least 95% of the molybdenum to precipitate out as a molybdate complex.

11. The method of any of claims 1-10, wherein the Group VB metal in the used dispersed catalyst for metal recovery is vanadium, and wherein the first supernatant contains 0.1 to 3% of the molybdenum present in the used dispersed catalyst, 1 to 20 % of the vanadium present in the used dispersed catalyst, and 1 to 35 % of the nickel present in the used dispersed catalyst.

12. The method of claim 11, wherein at least one of a water soluble sulfide, a water soluble polysulfide, or mixtures thereof is added to the first supernatant for a pH level of between 5 and 7 to obtain a precipitate of Mo, Ni, and V sulfides, wherein optionally H₂S is added to the first supernatant at a pressure from atmospheric to 100 psig and at a temperature ranging from 50 to 95°C.

13. The method of recovering metals of claim 1, wherein the hydroprocessing catalyst has the general formula (X)ₐ(M)_{b}[(CH₃CH₂)_{c}N(CH₃)₃]_{d}O_{z} and contains at least a group VB metal, wherein X is Ni, M Mo , c is an integer from 10 to 40, the molar ratio of a:b is from 0.5/1 to 3/1.

14. The method of any of claims 1 - 13, wherein the used dispersed catalyst originating from a hydroprocessing catalyst has a median size of 0.01 to 200 microns, and the used dispersed catalyst has a pore volume of 0.05-5 ml/g as determined by nitrogen adsorption.

15. The method of recovering metals of claim 1, wherein the recovering of metals is recovering of metals including vanadium from a used dispersed catalyst having a general formula (M^{t})*ₐ*(X^{u})*_{b}*(S^{v})*_{d}*(C^{w})*ₑ*(H^{x})*_{f}*(O^{y})*_{g}*(N^{z})*ₕ* containing at least a Group VB metal, wherein M is at least one group VIB metal, X is at least one of a non-noble Group VIII metal, a Group VIIIB metal, a Group VIB metal, a Group IVB metal, and a Group IIB metal, *0* =*< b* / *a* =*<* 5, (*a* + 0.5*b*) <= d <= (5*a* + 2*b),* 0 <= *e* <= 11(*a*+*b*), 0 <= *f* <= 7(a+b), 0 <= *g* <= 5(*a* + *b*)*,* 0 <= *h* <= 0.5(*a* + *b*); t, u, v, w, x, y, z, each representing total charge for each of: M, X, S, C, H, O and N, respectively; t*a*+u*b*+v*d*+we+x*f*+y*g*+z*h*=0;
wherein the contacting is contacting the used dispersed catalyst with a leaching solution containing ammonia and air to dissolve the Group VIB metal and the Group VIII metal into the leaching solution at a sufficient temperature and pressure to form a pressure leach slurry containing at least a group VIB soluble metal complex and at least a group VIII soluble metal complex, ammonium sulfate and solid residue containing at least a Group VB metal complex and coke;
the separating is separating and removing the solid residue containing ammonium metavanadate and coke from the pressure leach slurry;
and, following the precipitating of at least a portion of the Group VIB metal and at least a portion of the Group VIII metal from the pressure leach solution, the method further comprises
recovering the metal complexes by filtration, forming a first supernatant containing 0.1 to 3% of the Group VIB metal in the used dispersed catalyst for metal recovery, 1 to 20 % of the Group VB metal in the used dispersed catalyst for metal recovery, and 1 to 35 % of the Group VIII metal in the used dispersed catalyst for metal recovery;
precipitating from the first supernatant at least a portion of the Group VIB metal and at least a portion of the Group VIII metal, wherein the precipitation being carried out at a second pre-selected pH to precipitate as metal complexes at least 95% of the Group VIB metal and at least 95% of the Group VIII metal initially present in the first supernatant prior to the precipitation at the second pre-selected pH; and
recovering the Group VIB and group VIII metal sulfides by filtration, forming a second supernatant containing less than 100 ppm of the group VIB metal, less than 20 ppm of the Group VIII metal, and less than 100 ppm of the group VB metal,
wherein the Group VIB metal is molybdenum and wherein the Group VIII metal is nickel.

## Patentansprüche

1. Verfahren zur Wiedergewinnung von Metallen aus einem benutzten dispergierten Katalysator, entstanden aus einem Metallsulfidkatalysator der Gruppe VIB und mindestens einem Metall der Gruppe VB, promoviert mit einem Metall der Gruppe VIII, für die Hydrobehandlung von Kohlenwasserstofföl, das Verfahren umfassend
Zusammenbringen des benutzten dispergierten Katalysators mit einer Auslaugungslösung, enthaltend Ammoniak und Luft zum Lösen des Metalls der Gruppe VIB und des Metalls der Gruppe VIII in die Auslaugungslösung bei einer Temperatur und einem Druck, ausreichend zum Bilden eines Druck-Auslaugungsschlamms, enthaltend mindestens einen löslichen Metallkomplex der Gruppe VIB und mindestens einen löslichen Metallkomplex der Gruppe VIII und einen Feststoffrückstand, enthaltend mindestens einen Metallkomplex der Gruppe VB und Koks;
Abtrennen und Entfernen des Feststoffrückstands, enthaltend den Metallkomplex der Gruppe VB und Koks, aus dem Druck-Auslaugungsschlamm, zum Bilden einer Druck-Auslaugungslösung;
Ausfällen aus der Druck-Auslaugungslösung (PLS) mindestens eines Teils des Metalls der Gruppe VIB und mindestens eines Teils des Metalls der Gruppe VIII, wobei das Ausfällen bei einem ersten vorbestimmten pH-Wert ausgeführt wird zum Ausfällen als Metallkomplexe mindestens eines Teils des Metalls der Gruppe VIB und mindestens eines Teils des Metalls der Gruppe VIII, wobei das Verfahren zudem umfasst
Wiedergewinnen der ausgefällten Metallkomplexe durch mindestens ein Abtrennmittel, ausgewählt aus Absetzung, Filtrierung, Dekantierung, Zentrifugierung und Kombinationen davon, Bilden eines ersten Überstands, im Wesentlichen frei von mindestens einem Teil des Metalls der Gruppe VIB und von mindestens einem Teil des Metalls der Gruppe VIII;
wobei das Metall der Gruppe VIB im benutzten dispergierten Katalysator zur Metallwiedergewinnung Molybdän ist, das Metall der Gruppe VIII im benutzten dispergierten Katalysator zur Metallwiedergewinnung Nickel ist; und
wobei die PLS mit einem Additiv vermischt wird, ausgewählt aus der Gruppe mineralische Säure, Schwefelverbindung mit einer Sulfhydryl-Gruppe oder einer ionisierten Sulfhydryl-Gruppe und Gemischen davon, unter Vermischungsbedingungen bei einer Temperatur von 50 bis 95°C, einem pH-Wert von 1 bis 4 und während einer ausreichenden Dauer, damit mindestens 90% des Molybdäns und des Nickels in der PLS als Metallkomplexe ausfallen.

2. Verfahren gemäß Anspruch 1, wobei der erste Überstand 0,1 bis 3% des Metalls der Gruppe VIB im benutzten dispergierten Katalysator zur Wiedergewinnung von Metallen enthält, 1 bis 20% des Metalls der Gruppe VB im benutzten dispergierten Katalysator zur Wiedergewinnung von Metallen und 1 bis 35% des Metalls der Gruppe VIII im benutzten dispergierten Katalysator zur Wiedergewinnung von Metallen.

3. Verfahren gemäß Anspruch 1, wobei der erste Überstand 0,1 bis 3% des Metalls der Gruppe VIB im benutzten dispergierten Katalysator zur Wiedergewinnung von Metallen enthält, 1 bis 20% des Metalls der Gruppe VB im benutzten dispergierten Katalysator zur Wiedergewinnung von Metallen und 1 bis 35% des Metalls der Gruppe VIII im benutzten dispergierten Katalysator zur Wiedergewinnung von Metallen, zudem umfassend den Schritt
Ausfällen aus dem ersten Überstand mindestens eines Teils des Metalls der Gruppe VIB und mindestens eines Teils des Metalls der Gruppe VIII, wobei das Ausfällen bei einem zweiten vorbestimmten pH-Wert ausgeführt wird, um als Metallkomplexe mindestens 95% des Metalls der Gruppe VIB und mindestens 95% des Metalls der Gruppe VIII, die anfänglich vor dem Ausfällen beim zweiten vorbestimmten pH-Wert im ersten Überstand vorlag, vor der Ausfällung beim zweiten pH-Wert auszufällen.

4. Verfahren gemäß Anspruch 3, wobei das Verfahren zudem umfasst
Wiedergewinnen der Metallsulfide der Gruppe VIB und der Gruppe VIII durch mindestens ein Abtrennmittel, ausgewählt aus Absetzung, Filtrierung, Dekantierung, Zentrifugierung und Kombinationen davon, zum Bilden eines zweiten Überstands, enthaltend geringer als 100 ppm des Metalls der Gruppe VIB, geringer als 20 ppm des Metalls der Gruppe VIII und geringer als 100 ppm des Metalls der Gruppe VB.

5. Verfahren gemäß Anspruch 3, wobei das Metall der Gruppe VB im benutzten dispergierten Katalysator zur Wiedergewinnung von Metallen Vanadium ist, die Druck-Auslaugungslösung durch Zusetzen von Schwefelsäure auf einen pH-Wert von 3 oder geringer eingestellt wird, zum Ausfällen von mindestens 95% des Molybdäns als Molybdatkomplex, wobei der Molybdatkomplex durch Filtrierung vom ersten Überstand abgetrennt wird, H₂S bei einem Druck zwischen atmosphärisch und 100 psig und einer Temperatur im Bereich von 50 bis 95°C zugesetzt wird zum Erhalten einer Ausfällung aus Mo-, Ni- und V-Sulfiden, wobei die Mo-, Ni- und V-Sulfide durch Filtrierung vom zweiten Überstand abgetrennt werden, und wobei der zweite Überstand 100 bis 1000 gpL Ammoniumsulfat, geringer als 100 ppm Molybdän, geringer als 20 ppm Nickel und geringer als 100 ppm Vanadium enthält.

6. Verfahren gemäß irgendeinem der Ansprüche 1 bis 5, wobei mindestens 90% des Metalls der Gruppe VIB als Metallkomplex aus der Druck-Auslaugungslösung ausfällt.

7. Verfahren gemäß irgendeinem der Ansprüche 1 bis 6, wobei der erste vorbestimmte pH-Wert im Bereich von 2,5 bis 3,3 ist, zum Ausfällen von mehr als 90% des Molybdäns als Molybdatkomplex.

8. Verfahren gemäß irgendeinem der Ansprüche 1 bis 7, wobei der pH-Wert in der Druck-Auslaugungslösung mit mindestens einem aus einem wasserlöslichen Sulfid, einem wasserlöslichen Polysulfid oder Gemischen davon auf einen pH-Wert von 3 oder geringer eingestellt wird.

9. Verfahren gemäß irgendeinem der Ansprüche 1 bis 7, wobei der pH-Wert der PLS mit einer Säure, ausgewählt aus der Gruppe Schwefelsäure, Salzsäure, Phosphorsäure und Salpetersäure, auf einen pH-Wert von 3,5 oder geringer eingestellt wird.

10. Verfahren gemäß Anspruch 9, wobei die PLS durch Zusetzen einer Schwefelsäure auf einen pH-Wert von 3 oder geringer eingestellt wird, so dass mindestens 95% des Molybdäns als Molybdatkomplex ausfällt.

11. Verfahren gemäß irgendeinem der Ansprüche 1 bis 10, wobei das Metall der Gruppe VB im benutzten dispergierten Katalysator zur Wiedergewinnung von Metall Vanadium ist, und wobei der erste Überstand 0,1 bis 3% des im benutzten dispergierten Katalysator vorliegenden Molybdäns enthält, 1 bis 20% des im benutzten dispergierten Katalysator vorliegenden Vanadiums und 1 bis 35% des im benutzten dispergierten Katalysator vorliegenden Nickels.

12. Verfahren gemäß Anspruch 11, wobei mindestens eines aus einem wasserlöslichen Sulfid, einem wasserlöslichen Polysulfid oder Gemischen davon zum ersten Überstand zugesetzt wird, so dass ein pH-Wert von 5 bis 7 erhalten wird, zum Erhalten von Mo-, Ni- und V-Sulfiden, wobei wahlweise H₂S bei einem Druck zwischen atmosphärisch und 100 psig und einer Temperatur im Bereich von 50 bis 95°C zum ersten Überstand zugesetzt wird.

13. Verfahren zur Wiedergewinnung von Metallen gemäß Anspruch 1, wobei der Hydrobehandlungskatalysator die Allgemeinformel (X)ₐ(M)_{b}[(CH₃CH₂)_{c}N(CH₃)₃]_{d}O_{z} hat und mindestens ein Metall der Gruppe VB enthält, worin X Ni ist, M Mo, c eine Ganzzahl von 10 bis 40, das Molarverhältnis von a:b von 0,5/1 bis 3/1.

14. Verfahren gemäß irgendeinem der Ansprüche 1 bis 13, wobei der benutzte dispergierte Katalysator, der aus einem Hydrobehandlungskatalysator entstanden ist, eine mittlere Größe von 0,01 bis 200 µm hat, und der benutzte dispergierte Katalysator ein Porenvolumen von 0,05 bis 5 ml/g hat, bestimmt durch Stickstoffadsorption.

15. Verfahren zur Wiedergewinnung von Metallen gemäß Anspruch 1, wobei die Wiedergewinnung von Metallen eine Wiedergewinnung von Metallen einschließlich Vanadium aus einem benutzten dispergierten Katalysator ist mit der Allgemeinformel (M^{t})ₐ(X^{u})_{b}(S^{v})_{d}(C^{w})ₑ(H^{x})_{f}(O^{y})_{g}(N^{z})ₕ, enthaltend mindestens ein Metall der Gruppe VB, wobei M mindestens ein Metall der Gruppe VIB ist, X mindestens eines aus einem nicht-Edelmetall der Gruppe VIII ist, einem Metall der Gruppe VIIIB, einem Metall der Gruppe VIB, einem Metall der Gruppe IVB, und einem Metall der Gruppe IIB, wobei 0 =< b / a =< 5, (a + 0,5b) <= d <= (5a + 2b), 0 <= e <= 11 (a+b), 0 <= f <= 7(a+b), 0 <= g <= 5(a + b), 0 <= h <= 0,5(a + b); wobei t, u, v, w, x, y, z jeweils die Gesamtladung für jedes aus M, X, S, C, H, O und N darstellen; wobei ta+ub+vd+we+xf+yg+zh=0;
wobei das Zusammenbringen ein Zusammenbringen des benutzten dispergierten Katalysators mit einer Auslaugungslösung ist, enthalten Ammoniak und Luft zum Lösen des Metalls der Gruppe VIB und des Metalls der Gruppe VIII in die Auslaugungslösung bei einer Temperatur und einem Druck, ausreichend zum Bilden eines Druck-Auslaugungsschlamms, enthaltend mindestens einen löslichen Metallkomplex der Gruppe VIB und mindestens einen löslichen Metallkomplex der Gruppe VIII, Ammoniumsulfat und einen Feststoffrückstand, enthaltend mindestens einen Metallkomplex der Gruppe VB und Koks;
das Abtrennen ein Abtrennen und Entfernen des Feststoffrückstands ist, enthaltend Ammoniummetavanadat und Koks aus dem Druck-Auslaugungsschlamm;
und wobei, nach Ausfällen von mindestens einem Teil des Metalls der Gruppe VIB und mindestens einem Teil des Metalls der Gruppe VIII aus der Druck-Auslaugungslösung, das Verfahren zudem umfasst
Wiedergewinnung des Metallkomplexes durch Filtrierung, Bilden eines ersten Überstands, enthaltend 0,1 bis 3% des Metalls der Gruppe VIB im benutzten dispergierten Katalysator zur Wiedergewinnung von Metallen, 1 bis 20% des Metalls der Gruppe VB im benutzten dispergierten Katalysator zur Wiedergewinnung von Metallen und 1 bis 35% des Metalls der Gruppe VIII im benutzten dispergierten Katalysator zur Wiedergewinnung von Metallen;
Ausfällen aus dem ersten Überstand mindestens eines Teils des Metalls der Gruppe VIB und mindestens eines Teils des Metalls der Gruppe VIII, wobei das Ausfällen bei einem zweiten vorbestimmten pH-Wert ausgeführt wird, um als Metallkomplexe mindestens 95% des Metalls der Gruppe VIB und mindestens 95% des Metalls der Gruppe VIII, die anfänglich vor dem Ausfällen beim zweiten vorbestimmten pH-Wert im ersten Überstand vorlag, auszufällen; und
Wiedergewinnen der Metallsulfide der Gruppe VIB und der Gruppe VIII durch Filtrierung, Bilden eines zweiten Überstands enthaltend geringer als 100 ppm des Metalls der Gruppe VIB, geringer als 20 ppm des Metalls der Gruppe VIII und geringer als 100 ppm des Metalls der Gruppe VB,
wobei das Metall der Gruppe VIB Molybdän ist und wobei das Metall der Gruppe VIII Nickel ist.

## Revendications

1. Procédé de récupération de métaux à partir d'un catalyseur dispersé épuisé originaire d'un catalyseur à base d'un sulfure d'un métal du Groupe VIB et d'au moins un métal du Groupe VB promu par un métal du Groupe VIII pour hydrotraitement d'une huile hydrocarburée, le procédé comprenant :
contacter le catalyseur dispersé épuisé avec une solution de lixiviation comprenant de l'ammoniac et de l'air pour dissoudre le métal du Groupe VIB et le métal du Groupe VIII dans la solution de lixiviation à une température et une pression suffisantes pour former une boue de lixiviation par pression contenant au moins un complexe métallique soluble du Groupe VIB et au moins un complexe métallique soluble du Groupe VIII et un résidu solide contenant au moins un complexe métallique du Groupe VB et de la coke ;
séparer et enlever le résidu solide contenant le complexe métallique du Groupe VB et la coke de la boue de lixiviation par pression, formant une solution de lixiviation par pression ;
précipiter de la solution de lixiviation par pression (PLS) au moins une partie du métal du Groupe VIB et au moins une partie du métal du Groupe VIII, où la précipitation est exécutée à un premier pH présélectionné pour précipiter comme complexes métalliques au moins une partie du métal du Groupe VIB et au moins une partie du métal du Groupe VIII, où le procédé comprend en plus :
récupérer les complexes métalliques précipités par au moins un moyen de séparation sélectionné parmi la sédimentation, la filtration, la décantation, la centrifugation et leurs combinaisons, former un premier surnageant essentiellement libre d'au moins une partie du métal du Groupe VIB et d'au moins une partie du métal du Groupe VIII ;
où le métal du Groupe VIB dans le catalyseur dispersé épuisé pour récupération de métaux est le molybdène et le métal du Groupe VIII dans le catalyseur dispersé épuisé pour récupération de métaux est le nickel ; et
où la PLS est mélangée avec un additif sélectionné parmi le groupe constitué et un acide minéral, un composé de soufre ayant un groupe sulfhydryle ou un groupe sulfhydryle ionisé et leurs mélanges, dans des conditions de mélange à une température de 50 à 95°C, un niveau pH de 1 à 4 et pendant une durée suffisante pour la précipitation d'au moins 90% de molybdène et du nickel de la PLS comme complexes métalliques.

2. Procédé selon la revendication 1, dans lequel le premier surnageant comprend 0,1 à 3% du métal du Groupe VIB dans le catalyseur dispersé épuisé pour la récupération d'un métal, 1 à 20% du métal du Groupe VB dans le catalyseur dispersé épuisé pour la récupération d'un métal, et 1 à 35% du métal du Groupe VIII dans le catalyseur dispersé épuisé pour la récupération d'un métal.

3. Procédé selon la revendication 1, dans lequel le premier surnageant comprend 0,1 à 3% du métal du Groupe VIB dans le catalyseur dispersé épuisé pour la récupération d'un métal, 1 à 20% du métal du Groupe VB dans le catalyseur dispersé épuisé pour la récupération d'un métal, et 1 à 35% du métal du Groupe VIII dans le catalyseur dispersé épuisé pour la récupération d'un métal, comprenant en plus l'étape de :
précipiter du premier surnageant au moins une partie du métal du Groupe VIB et au moins une partie du métal du Groupe VIII, où la précipitation est exécutée à un deuxième pH présélectionné pour précipiter comme complexes métalliques au moins 95% du métal du Groupe VIB et au moins 95% du métal du Groupe VIII initialement présents dans le premier surnageant avant la précipitation au deuxième pH présélectionné.

4. Procédé selon la revendication 3, dans lequel le procédé comprend en plus
récupérer les sulfures métalliques du Groupe VIB et du Groupe VIII par au moins un moyen de séparation sélectionné parmi la sédimentation, la filtration, la décantation, la centrifugation et leurs combinaisons, former un deuxième surnageant contenant moins de 100 ppm d'un métal du Groupe VIB, moins de 20 ppm d'un métal du Groupe VIII, et moins de 100 ppm d'un métal du Groupe VB.

5. Procédé selon la revendication 3, dans lequel le métal du Groupe VB dans le catalyseur dispersé épuisé pour la récupération d'un métal est le vanadium, la solution de lixiviation par pression est ajustée à un pH de 3 ou moins avec l'addition d'acide sulfurique pour la précipitation d'au moins 95% du molybdène comme complexe de molybdate, le complexe de molybdate est séparé du premier surnageant par filtration, H₂S est ajouté au premier surnageant à une pression entre atmosphérique et 100 psig et à une température dans l'intervalle de 50 à 95°C pour obtenir un précipité de sulfures de Mo, Ni et V, les sulfures de Mo, Ni et V sont séparés du deuxième surnageant par filtration, et où le deuxième surnageant contient 100 à 1000 gpL de sulfate d'ammonium, moins de 100 ppm de molybdène, moins de 20 ppm de nickel et moins de 100 ppm de vanadium.

6. Procédé selon quelconque des revendications 1 à 5, dans lequel au moins 90% du métal du Groupe VIB précipite de la solution de lixiviation par pression comme complexe métallique.

7. Procédé selon quelconque des revendications 1 à 6, dans lequel le premier pH présélectionné est dans l'intervalle de 2,5 à 3,3 pour précipiter supérieur à 90% du molybdène comme complexe de molybdate.

8. Procédé selon quelconque des revendications 1 à 7, dans lequel la pH de la solution de lixiviation par pression est ajusté à un pH de 3 ou moins avec au moins un sulfure soluble dans l'eau, au moins un polysulfure soluble dans l'eau, ou leurs mélanges.

9. Procédé selon quelconque des revendications 1 à 7, dans lequel le pH de la PLS est ajusté à un pH de 3,5 ou moins avec un acide sélectionné parmi le groupe de l'acide sulfurique, de l'acide chlorhydrique, de l'acide phosphorique et de l'acide nitrique.

10. Procédé selon la revendication 9, dans lequel la PLS est ajustée à un pH de 3 ou moins avec l'addition d'acide sulfurique pour précipiter au moins 95% du molybdène comme complexe de molybdate.

11. Procédé selon quelconque des revendications 1 à 10, dans lequel le métal du Groupe VB dans le catalyseur dispersé épuisé pour récupération de métaux est le vanadium, et dans lequel le premier surnageant comprend 0,1 à 3% du molybdène présent dans le catalyseur dispersé épuisé, 1 à 20% du vanadium présent dans le catalyseur dispersé épuisé, et 1 à 35% du nickel présent dans le catalyseur dispersé épuisé.

12. Procédé selon la revendication 11, dans lequel au moins un parmi un sulfure soluble dans l'eau, un polysulfure soluble dans l'eau, ou leurs mélanges est ajouté au premier surnageant pour un niveau pH entre 5 et 7 pour obtenir un précipité de sulfures de Mo, Ni et V, où éventuellement H₂S est ajouté au premier surnageant à une pression entre atmosphérique et 100 psig et à une température dans l'intervalle de 50 à 95°C.

13. Procédé selon la revendication 1, dans lequel le catalyseur d'hydrotraitement a la formule générale (X)ₐ(M)_{b}[(CH₃CH₂)_{c}N(CH₃)₃]_{d}O_{z} et contient au moins un métal du Groupe VB, où X est Ni, M est Mo, c est un nombre entier de 10 à 40, le rapport molaire de a:b est de 0,5/1 à 3/1.

14. Procédé selon quelconque des revendications 1 à 13, dans lequel le catalyseur dispersé épuisé originaire d'un catalyseur d'hydrotraitement a une taille médiane de 0,01 à 200 microns, et le catalyseur dispersé épuisé a un volume de pore de 0,05 à 5 ml/g, déterminé par adsorption d'azote.

15. Procédé selon la revendication 1, dans lequel la récupération de métaux est une récupération de métaux comprenant le vanadium à partir d'un catalyseur dispersé épuisé ayant une formule générale (M^{t})ₐ(X^{u})_{b}(S^{v})_{d}(C^{w})ₑ(H^{x})_{f}(O^{y})_{g}(N^{z})ₕ contenant au moins un métal du Groupe VB, où M est au moins un métal du Groupe VIB, X est au moins un parmi un métal non noble du Groupe VIII, un métal du Groupe VIIIB, un métal du Groupe VIB, un métal du Groupe IVB, et un métal du Groupe IIB, où 0 =< b / a =< 5, (a + 0,5b) <= d <= (5a + 2b), 0 <= e <= 11 (a+b), 0 <= f <= 7(a+b), 0 <= g <= 5(a + b), 0 <= h <= 0,5(a + b); où t, u, v, w, x, y, z chacun représente la charge totale de M, X, S, C, H, O et N ; où ta+ub+vd+we+xf+yg+zh=0 ;
où contacter est contacter le catalyseur dispersé épuisé avec une solution de lixiviation comprenant de l'ammoniac et de l'air pour dissoudre le métal du Groupe VIB et le métal du Groupe VIII dans la solution de lixiviation à une température et une pression suffisantes pour former une boue de lixiviation par pression contenant au moins un complexe métallique soluble du Groupe VIB et au moins un complexe métallique soluble du Groupe VIII, du sulfate d'ammonium et un résidu solide contenant au moins un complexe métallique du Groupe VB et de la coke ;
séparer est séparer et enlever le résidu solide contenant du métavanadate d'ammonium et de la coke de la boue de lixiviation par pression ;
et, après la précipitation d'au moins une partie du métal du Groupe VIB et d'au moins une partie du métal du Groupe VIII de la solution de lixiviation par pression, le procédé comprend en plus
récupérer les complexes métalliques par filtration, former un premier surnageant comprenant 0,1 à 3% du métal du Groupe VIB dans le catalyseur dispersé épuisé pour la récupération d'un métal, 1 à 20% du métal du Groupe VB dans le catalyseur dispersé épuisé pour la récupération d'un métal, et 1 à 35% du métal du Groupe VIII dans le catalyseur dispersé épuisé pour la récupération d'un métal ;
précipiter du premier surnageant au moins une partie du métal du Groupe VIB et au moins une partie du métal du Groupe VIII, où la précipitation est exécutée à un deuxième pH présélectionné pour précipiter comme complexes métalliques au moins 95% du métal du Groupe VIB et au moins 95% du métal du Groupe VIII initialement présents dans le premier surnageant avant la précipitation au deuxième pH présélectionné ; et
récupérer les sulfures métalliques du Groupe VIB et du Groupe VIII, former un deuxième surnageant contenant moins de 100 ppm du métal du Groupe VIB, moins de 100 ppm du métal du Groupe VIII, et moins de 100 ppm du métal du Groupe VB,
où le métal du Groupe VIB est le molybdène et où le métal du Groupe VIII est le nickel.
